Europäisches Patentamt

European Patent Office

Office européen des brevets

(19)

(11) EP 0 685 086 B1

(12) **EUROPÄISCHE PATENTSCHRIFT**

(45) Veröffentlichungstag und Bekanntmachung des Hinweises auf die Patenterteilung:
**16.04.1997 Patentblatt 1997/16**

(21) Anmeldenummer: **94908303.4**

(22) Anmeldetag: **14.02.1994**

(51) Int Cl.6: **G06F 9/44**, G06F 11/22

(86) Internationale Anmeldenummer:
**PCT/EP94/00420**

(87) Internationale Veröffentlichungsnummer:
**WO 94/19739 (01.09.1994 Gazette 1994/20)**

(54) **EINRICHTUNG ZUR AUTOMATISCHEN ERZEUGUNG EINER WISSENSBASIS FÜR EIN DIAGNOSE-EXPERTENSYSTEM**

DEVICE FOR AUTOMATICALLY GENERATING A KNOWLEDGEBASE FOR AN EXPERT DIAGNOSTIC SYSTEM

DISPOSITIF PERMETTANT DE PRODUIRE AUTOMATIQUEMENT UNE BASE DE CONNAISSANCES POUR UN SYSTEM EXPERT DE DIAGNOSTIC

(84) Benannte Vertragsstaaten:
**BE DE FR GB IT NL**

(30) Priorität: **17.02.1993 DE 4305522**

(43) Veröffentlichungstag der Anmeldung:
**06.12.1995 Patentblatt 1995/49**

(73) Patentinhaber: **Daimler-Benz Aktiengesellschaft**
**70546 Stuttgart (DE)**

(72) Erfinder:
• **MEYER-GRAMANN, Klaus, Dieter**
**D-10589 Berlin (DE)**

• **JÜNGST, Ernst-Werner**
**D-13349 Berlin (DE)**

(74) Vertreter: **Erbacher, Alfons, Dipl.-Ing.**
**AEG Aktiengesellschaft**
**Patent- und Lizenzwesen**
**60591 Frankturt (DE)**

(56) Entgegenhaltungen:
**EP-A- 0 352 514** **EP-A- 0 469 756**
**US-A- 4 766 595**

## Beschreibung

Die vorliegende Erfindung bezieht sich auf eine Einrichtung zur Erstellung der Wissensbasis eines Expertensystems for technische Systeme, die in unterschiedlichen Varianten auftreten können.

## Stand der Technik

Immer dann, wenn ein technisches System sein Soll-Funktion nicht oder unzureichend erbringt, ist eine technische Diagnose an diesem System erforderlich. Die technische Diagnose besteht daraus, daß die Ursache des beobachteten Fehlverhaltens ermittelt und dann eine Abhilfe durchgeführt wird, die die Ursache beseitigt. Für komplexe technische Systeme erfordert eine Diagnose das Wissen eines erfahrenen menschlichen Experten. Diese aber sind teuer und oft nicht verfügbar. Daher muß ein Weg gefunden werden, ihr Wissen verfügbar zu machen, ohne daß sie selber in Anspruch genommen werden.

Eine moderne Lösung dieser Anforderung ist es, ein Expertensystem für technische Diagnose bereitzustellen. Leistungsfähige Expertensysteme vermögen die Verfügbarkeit technischer Systeme entscheidend zu steigern und die Einsatzkosten zu senken.

Ein Expertensystem wird heutzutage typischerweise als wissensbasiertes System konstruiert, d. h. als ein Software-System, in dem das Wissen des menschlichen Experten in einer Wissensbasis strukturiert abgespeichert ist. Die übrigen Bestandteile des Expertensystems sind von der Wissensbasis logisch getrennt und daher wiederverwendbar, sie werden zusammenfassend Expertensystem-Schale genannt. Zur Expertensystem-Schale gehören die Problem-lösungs-Komponente, die eine Diagnose durchführt und hierfür die Wissensbasis auswertet, die Erklärungs-Komponente, die dem Benutzer die Aktionen des Expertensystems auf Wunsch erklärt, und die Benutzer-Oberfläche. Ein wissensbasiertes System wird gefertigt, indem man eine Expertensystem-Schale auswählt und die Wissensbasis mit dem strukturierten Wissen des menschlichen Experten füllt.

Diagnose-Expertensysteme werden in symptombasierte und modell-basierte Systeme klassifiziert:

o Die Wissensbasis eines symptom-basierten Expertensystems enthält das Erfahrungs-Wissen des menschlichen Experten über die Störungen am technischen System und über die Zusammenhängen zwischen diesen Störungen und den während einer Diagnose ermittelbaren Symptomen.
o Die Wissensbasis eines modell-basierten Expertensystems enthält einerseits ein Modell, das die Struktur und das funktionale Zusammenwirken der Module des zu diagnostizierenden technischen Systems beschreibt, andererseits eine Beschreibung des Soll-Verhaltens und des Verhaltens im Störungsfalle aller Module.

Ein modellbasiertes Expertensystem kann nur dann erstellt werden, wenn man ein genügend genaues Modell für die Struktur und das funktionale Zusammenwirken der Module des zu diagnostizierenden technischen Systems erstellen kann. Dies ist in vielen Anwendungen zu aufwendig oder völlig unmöglich, da man das Innenleben des technischen System nicht genau genug beschreiben kann. In diesem Falle bleibt nur der symptombasierte Ansatz.

Der klassische und oft verwendete Ansatz, das Erfahrungs-Wissen eines Experten formalisiert darzustellen, ist der, das Wissen in Regeln der Form "FALLS Prämisse DANN Konklusion" zu strukturieren. Die Prämisse jeder dieser Regel ist ein einzelnes Symptom oder eine logische Verknüpfung von Symptomen, die am technischen System beobachtet werden können; die Konklusion eine Aussage darüber, welche Störungen bei Erfülltsein der Prämisse vorliegen können oder müssen und welche auszuschließen sind. Diese Strukturierung bieten z. B. "EX-SYS" und "NexpertOBJECT", zwei Werkzeuge zum Bau von Expertensystemen.

Ein weiterer oft benutzter Ansatz ist der Fehlersuchbaum. Die Wissensbasis enthält einen Fehlerbaum, das ist ein gerichteter Graph, dessen Knoten für die am technischen System möglichen Störungen und dessen Kanten für die kausalen Zusammenhänge unter ihnen stehen. Die Blätter stehen für die möglichen Ursachen. Weiterhin enthält die Wissensbasis Zusammenhänge zwischen Störungen und Symptomen. Das Expertensystem "navigiert" in diesem Fehlersuchbaum mit dem Ziel, ein Blatt zu erreichen. Hierzu wertet es jedes gewonnene Symptom aus, um von einem Knoten zu einem anderen zu gelangen. Diese Vorgehensweise wendet beispielsweise die Expertensystem-Schale "testbench" an.

Als Engpaß bei der Erstellung von symptom-basierten Expertensystemen hat sich der Wissenserwerb erwiesen, das ist der Vorgang, durch den das Erfahrungs-Wissen eines menschlichen Diagnose-Experten erfragt oder sonstwie erfaßt wird und in die Struktur gebracht wird, in der das Expertensystem das Wissen auswerten kann. Der Wissenserwerb ist oft teuer, zeitaufwendig und fehleranfällig.

Der Engpaß und Kostenfaktor des Wissenserwerbs fällt dann besonders ins Gewicht, wenn man Expertensysteme für alle Varianten einer Klasse von technischen Systeme bereitstellen will und nur nur ein einziges Expertensystem benötigt, das ein häufig eingesetztes technisches System diagnostiziert. Eine Klasse technischer Systeme besitzt oft hohe Variantenvielfalt: Um ein technisches System an die Wünsche des Kunden anzupassen, wird es typischerweise aus Modulen zusammengesetzt. Alternative oder optionale Module werden so ausgewählt, daß ihr Zusammenwirken die gewünschte Funktionalität erbringt. Schon bei einer verhältnismäßig kleinen Zahl von Alternativen oder Optionen hat man eine gewaltige Zahl möglicher Varianten: Bei nur 10 Modulen mit je 3 Alternativen gibt es bereits 3^10 = 59.049 Kombinations-Möglichkeiten.

Bislang war kein Verfahren bekannt, wie man im Falle hoher Variantenvielfalt effizient Wissensbasen erstellt. Sehr ineffizient ist es, für jede Variante "von Hand" eine eigene Wissensbasis zu erstellen oder eine Wissensbasis "von Hand" an eine Variante anzupassen. Darüber hinaus liegt oft nicht genug Erfahrungs-Wissen für eine bestimmte Variante vor.

Will man eine einzige Wissensbasis erstellen, die für jede Variante gültig ist und daher universell eingesetzt werden kann, so muß man im strukturierten Wissen explizit Bezug auf die verschiedenen Varianten nehmen. Das Verhalten und damit das Wissen über ein Modul des technischen Systems hängt oft davon ab, von welcher Version ein anderes Modul ist. Beim Wissenserwerb muß man alle möglichen Versionen berücksichtigen - ihr Verhalten kann sich gerade im Störungsfalle erheblich unterscheiden. Fallunterscheidungen für die verschiedenen Varianten des technischen Systems sind erforderlich, und aufgrund der gewaltigen Zahl von Kombinations-Möglichkeiten muß man viele Fallunterscheidungen treffen. Das strukturierte Wissen wird äußerst umfangreich. Es ist kaum noch zu übersehen, läßt sich nur schwer pflegen und validieren und erfordert viel Speicherplatz.

Eine Abhilfe ist in EP-A 0 352 514 vorgeschlagen: Es wird eine Wissensbasis aufgestellt, die das Wissen enthält, das allen zu diagnostizierenden technischen Systemen gemeinsam ist (standard rulebase). Außerdem wird für jede Variante eine Wissensbasis entwickelt, die die Besonderheiten der Variante enthält (calibration rulebase). Auch dieses Vorgehen löst das Problem des hohen Wissenserwerbs-Aufwandes in den meisten Fällen nicht: Für viele komplexere technische Systeme ist bereits die universelle Wissensbasis (standard rulebase) umfangreich und schwer zu warten, da sie das gesamte technische System und alle seine Module beschreibt. Unterscheiden sich die Varianten des technischen Systems stark, ist darüber hinaus auch die Wissensbasis für die Besonderheiten einer Variante (calibration rulebase) zwangsläufig umfangreich.

Oft muß ein Expertensystem mehrere oder gar alle Varianten des technischen Systems diagnostizieren können-beispielsweise dann, wenn das Expertensystem in einer KFz-Werkstatt eingesetzt wird und viele verschiedene KFz-Varianten zu reparieren sind. Die bislang bekannten Vorgehensweisen weisen erhebliche Nachteile auf:

o    Die Nachteile einer universell einsetzbaren Wissensbasis wurden bereits genannt

o    Ist ein technisches System zu diagnostizieren, so wird vor der eigentlichen Diagnose die Wissensbasis "von Hand" aus Bestandteilen zusammengesetzt und damit auf die jeweilige Variante zugeschnitten. Der Mensch, der diese Tätigkeit vornimmt, muß selber dafür Sorge tragen, daß sich die Bestandteile zusammenpassen. Diese Tätigkeit ist zeitraubend, kostenträchtig und nur von Spezialisten zu erledigen, da sie gute Kenntnisse der Struktur der Wissensbasis erfordert.

o    Dem Expertensystem wird für jede Variante eine eigene Wissensbasis vorab zur Verfügung gestellt. Ist ein technisches System zu diagnostizieren, so wählt das Expertensystem die passende Wissensbasis aus und verwendet sie. Das Expertensystem kann nur die Varianten diagnostizieren, für die es eine Wissensbasis besitzt; man muß also vorhersehen, welche Varianten möglicherweise einer Diagnose bedürfen werden. Andere Varianten kann das Expertensystem überhaupt nicht diagnostizieren. Bei jeder neu zum Einsatz gelangenden Variante muß eine neue Wissensbasis ausgeliefert werden. Die Menge der Wissensbasen erfordert großen Speicherplatz.

Ein technisches System verändert sich oft im Laufe seines Einsatzes: ein Modul wird durch ein anderes ersetzt, das sich vom ersten diagnoserelevant unterscheidet. Bislang war keine Methode bekannt, wie man die Wissensbasis eines Expertensystems für dieses technische System effizient aktualisiert. Die bislang bekannten Verfahren erfordern, daß die gesamte Wissensbasis nach Nennungen des "alten" Moduls durchsucht wird und man "von Hand" das vom "alten" Modul abhängige Wissen abändert.

Aufgabe der Erfindung war es daher, eine Einrichtung zu schaffen,

o    die auch dann einen zeit- und kostensparenden sowie wenig fehleranfälligen Wissenserwerb für eine Klasse modularer technischer Systeme gestattet, wenn die Klasse eine hohe Variantenvielfalt besitzt,

o    und mit der man bei diagnoserelevanten Änderungen an einer Variante die Wissensbasis schnell und wenig fehleranfällig an die Änderung anpassen kann.

Aufbauend auf dieser Einrichtung war eine Methode zu entwickeln,

o    wie ein Expertensystem jede mögliche Variante des technischen Systems schnell diagnostizieren kann Sicherheitsanalysen und die FMEA ("failure mode and effect analysis") sind zwei Beispiele für Aufgabenstellungen, in denen ein Fehlermodell ("Fehlerbaum") eines technischen Systems TS benötigt wird. Im Falle hoher Variantenvielfalt treten die gerade genannten Probleme, eine Wissensbasis zu erstellen, auch in dieser Aufgabe auf. Eine zusätzliche Aufgabe der Erfindung war es daher, ein Verfahren und eine Einrichtung zu schaffen, das auch für eine Klasse modularer technischer Systeme hoher Variantenvielfalt ein vollständiges Fehlermodell zu erzeugen gestattet.

## Lösungsidee

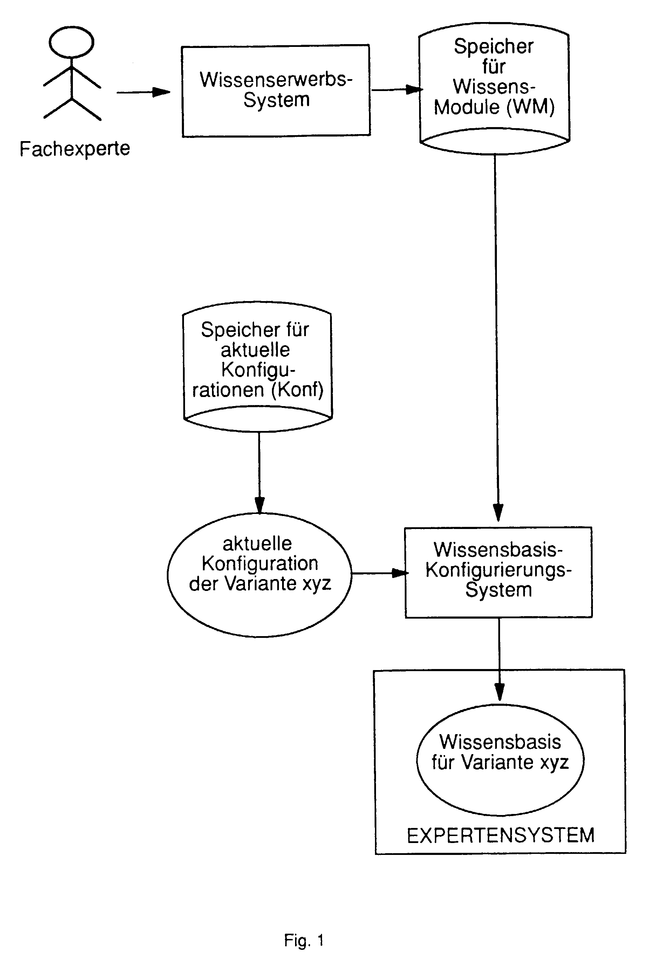

Die Idee der erfindungsgemäßen Einrichtung wie in Anspruch 1 definiert ist: Das für eine Diagnose benötigte Wissen des Experten wird bei der formalisierten Abspeicherung aufgeteilt, und zwar analog zur Modularisierung des technischen Systems. Das Wissen über einen Modul-Typ M-Typ, der in einer Variante des technischen Systems mindestens einmal auftritt, ist so strukturiert, daß es für alle Exemplare vom Typ M-Typ gilt. Alles für eine Diagnose benötigte Wissen über M-Typ wird nach dem Wissenserwerb in einem logischen Modul zusammengefaßt und abgespeichert. Dieses logische Modul wird im folgenden "Wissens-Modul" genannt. Die Wissensbasis für eine Variante wird automatisch durch Konfigurierung von Wissens-Moduln anhand der aktuellen Konfiguration der Variante erstellt. Figur 1 illustriert diese Idee.

## Kurzbeschreibung der Figuren

Fig. 1 illustriert die Idee, eine Wissensbasis automatisch aus Wissens-Modulen zu konfigurieren

Fig. 2 zeigt die Zusammenhänge unter den Begriffen "Einheiten", "Systeme", "Komponenten", "Teilsysteme" und "technisches System".

Fig. 3 illustriert die Begriffe und Zusammenhänge des semantischen Netzes, das eine nach dem erfindungsgemäßen Verfahren automatisch konfigurierte Wissensbasis strukturiert.

Fig. 4 illustriert die drei möglichen Artein einer Relation zwischen einem Einheits-Typ und einer Störung

Fig. 5 illustriert die zwei möglichen Arten einer Relation zwischen einer Rolle in einem System-Typ und einer Störung

Fig. 6 zeigt, wie ein Rechner Wb-Ersteller automatisch einen vollständigen Störungsgaphen für ein technisches System erzeugt. Im Speicher Konf ist die aktuelle Konfigurastion des technsichen Systems abgelegt, WM enthält alle benötigten Wissens-Module.

Fig. 7 zeigt, wie während der Generierung des vollständigen Störungsgaphen das Störungsgraph-Modul für eine Einheit in das Störungsgraph-Modul von SYS an dem Platz von Ro eingefügt wird.

Fig. 8 veranschaulicht die in Fig. 7 gezeigte Einfügung.

Fig. 9 zeigt, wie ein Rechner Diag ein technisches System diagnostiziert, indem er eine erfindungsgemäß erzeugte Wissensbasis abarbeitet

Fig. 10 zeigt, wie während einer Diagnose ein Resultat Resu ausgewertet wird

Fig. 11 zeigt, wie während der Auswertung eines Resultates Resu die Erklärungen für Resu ausgewertet werden

Fig. 12 demonstriert, wie die Zusammenhänge zwischen Resultaten und Ursachen, die für eine Diagnose nach dem in Fig. 6 gezeigten Vorgehen benötigt werden, gewonnen werden.

Fig. 13 stellt dar, wie Wissen taxonomisch organisert ist.

Fig. 14 zeigt, wie die Informationen über die aktuelle Konfiguration eines technischen systems automatisch aus Informationen, die Einheits-Typen zugeordnet sind, gewonnen werden.

## Beschreibung

Die wesentlichen Informationen für die erfindungsgemäße Einrichtung sind in zwei Speichern gehalten:

- o Der Speicher Konf enthält die aktuelle Konfiguration der zu diagnostizierenden Variante, d. h. die Information, aus welchen Modulen die gerade betrachtete Variante besteht und von welchem Modul-Typ jedes Modul ist.

- o Der Speicher WM enthält alle benötigten Wissens-Module. Für jeden Modul-Typ, das in mindestens einer Variante des technischen Systems auftritt, ist das zugehörige Wissens-Modul im Speicher WM enthalten. Außerdem ist in WM ein Wissens-Modul für das technische System als ganzes enthalten, das beschreibt, wie die anderen Wissens-Module zusammenzufügen sind.

Die Wissens-Module in WM werden im Verlaufe des Wissenserwerbs erstellt. Ein Wissens-Modul in WM wird immer dann für eine Wissensbasis-Generierung verwendet, wenn in der Variante, für die eine Wissensbasis zu erzeugen ist, der reale Modul-Typ mindestens einmal auftritt. Die Informationen in Konf ist spezifisch für die zu diagnostizierenden Variante, während die Wissens-Module für jede andere Variante des technischen Systems wiederverwendet werdeen können.

Die Wissensbasis für eine Variante wird durch Konfiguration von Wissens-Modulen erstellt: Ein Rechner Wb-Ersteller zur Erzeugung einer Wissensbasis ermittelt durch Lesezugriff auf Konf die aktuelle Konfiguration der Variante und erzeugt dann für jedes reale Modul in der Variante eine Kopie des Wissens-Moduls für den Typ, dem das reale Modul angehört. Tritt ein reales Modul n-mal in der Variante auf, so werden n Kopien der Wissens-Module erzeugt. Alle so erzeugten Kopien der Wissens-Module fügt Wb-Ersteller automatisch zusammen und legt sie in einem Speicher Wb ab.

Bevor beschrieben wird, wie die Wissens-Module strukturiert sind und wie sie automatisch zusammengefügt werden, wird das Zusammenfügungs-Ergebnis beschrieben, also dargelegt, welche Struktur eine automatisch erzeugte Wissensbasis hat. Die Informationen in der Wissensbasis sind als semantisches Netz organisiert. Die Knoten dieses Netzes stehen für Begriffe, die für die Diagnose des technischen Systems bedeutsam sind, die Kanten für Zusammenhänge zwischen diesen Begriffen. Diese Begriffe und Zusammenhänge werden

im folgenden erläutert.

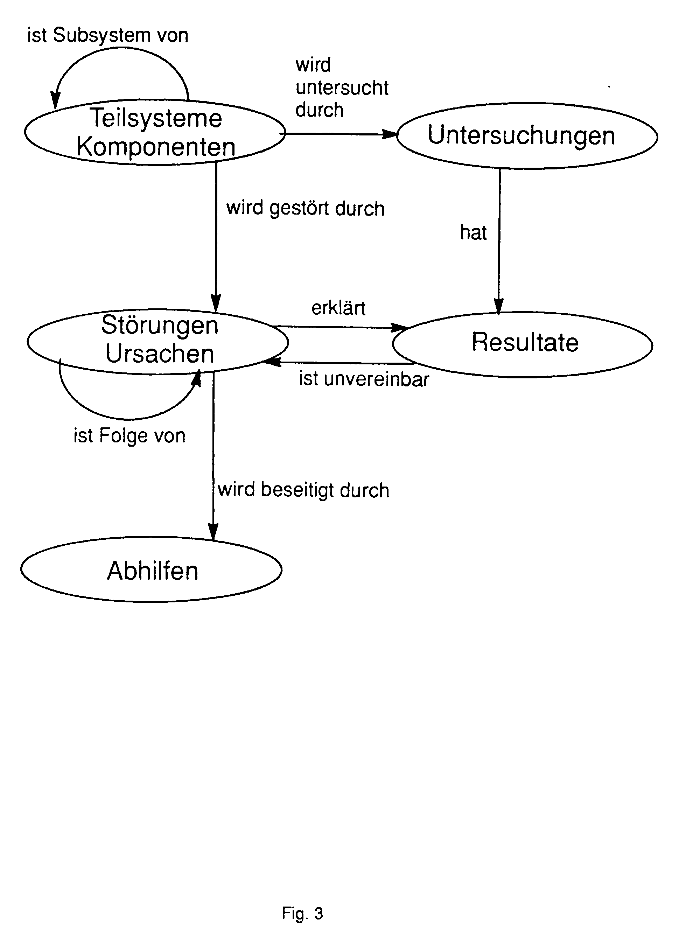

○ Das technische System besteht aus Modulen, Module haben Teilmodule usw. Die für die jeweilige Diagnoseaufgabe kleinsten austauschbaren Einheiten werden als elementare Module aufgefaßt und im folgenden "Komponenten" genannt. Für alle zusammengesetzten Module wird der Oberbegriff "Teilsysteme" benutzt. Für die Teilsysteme und das technische System als ganzes wird der Oberbegriff "Systeme" verwendet. Für Systeme und Komponenten wird der Oberbegriff "Einheiten" benutzt. Fig. 3 zeigt den Zusammenhang unter diesen Begriffen.

○ An Einheiten treten Störungen auf. Der Begriff "Störung" bezeichnet jede Art von fehlerhaftem Verhalten oder fehlerverursachendem Zustand der Einheit.

○ Störungen stehen in kausalen Zusammenhängen untereinander. Ein kausaler Zusammenhang ist von der Form "Störung A ist Folge von Störung B". Die kausalen Beziehungen unter Störungen bilden den Störungsgraph für das technische System.

○ Eine Störung, die nicht Folge einer anderen Störung ist und daher ein Blatt des Störungsgraphen ist, wird als Einfach-Ursache bezeichnet. Ziel einer Diagnose ist, die aktuell am technischen System vorliegende Einfach-Ursache zu identifizieren - oder die aktuelle Mehrfach-Ursache, die aus mehreren gleichzeitig aufgetretenen Einfach-Ursachen besteht.

○ Jeder Einfach-Ursache ist eine Abhilfe zugeordnet, das ist eine Maßnahme oder eine Folge von Maßnahmen, die die Einfach-Ursache beseitigen.

○ Um im Verlaufe einer Diagnose herauszufinden, welche Ursache am technischen System vorliegt, werden Untersuchungen duchgeführt, und zwar entweder automatisch vom Expertensystem oder von einem Menschen.

○ Die möglichen Ergebnisse einer Untersuchung heißen Resultate. Das Soll-Resultat einer Untersuchung ist das Resultat, das die Untersuchung beim störungsfreien technischen System hat.

○ Um ein während einer Diagnose gewonnenes Resultat auswerten zu können, ist es logisch mit Störungen verbunden. Zwei Arten von Relationen zwischen einer Störung und einem Resultat werden unterschieden:

- Eine Störung "erklärt" ein Resultat, wenn die Störung für das Resultat verantwortlich gemacht werden kann.
- Eine Störung "ist unvereinbar mit" einem Resultat.

Diese beiden Relationen schließen einander aus, oft besteht zwischen einer Störung und einem Resultat keine der beiden Relationen.

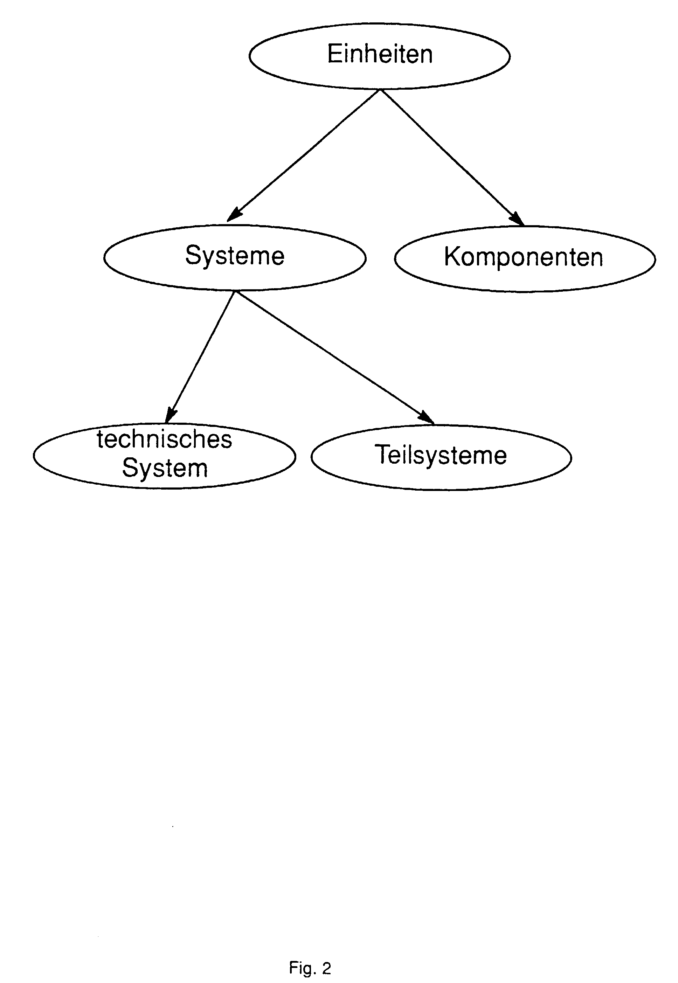

Figur 2 illustriert die Begriffe und Zusammenhänge des semantischen Netzes, das eine nach dem erfindungsgemäßen Verfahren automatisch konfigurierte Wissensbasis strukturiert.

Damit ein effizienter Wissenserwerb möglich ist und damit erfindungsgemäß eine Wissensbasis automatisch aus Wissens-Modulen konfiguriert werden kann, muß die Organisation der in den Wissens-Modulen enthaltenen Informationen folgenden Anforderungen genügen:

○ Die Informationen über einen Einheits-Typ müssen so im Wissens-Modul strukturiert sein, daß sie nicht davon abhängen, wie eine Einheit dieses Typs verwendet wird.

○ Die Kopien der Wissens-Module, die der Rechner Wb-Ersteller erzeugt, müssen automatisch aufgrund der Informationen in den Speichern WM und Konf zusammengefügt werden.

○ Für das technische System als ganzes muß es ein Wissens-Modul geben, das festlegt, wie die Wissens-Module für die Teilsysteme zusammenzufügen sind. Zweckmäßigerweise hat dieses Wissens-Modul die gleiche Struktur wie eines für ein Teilsystem-Typ.

○ Das Wissens-Modul für einen System-Typ darf nicht davon abhängen, von welchen Typen die Untereinheiten eines Exemplars des Systems-Typs sind, da sonst das Problem der Variantenvielfalt die Erstellung der Wissens-Module ineffizient macht. Das Wissens-Modul muß aber die Folgen beschreiben, die eine Störung an einer Untereinheit hat.

○ Das Wissen über ein Teilsystem muß sich genauso aus Wissens-Modulen konfigurieren lassen wie die Wissensbasis für das technische System selbst.

Um diesen Anforderungen gerecht zu werden, gibt es ein Wissens-Modul für das technische System als ganzes und je ein Wissens-Modul für jeden Teilsystem- und jeden Komponenten-Typ, der in dem technischen System mindestens einmal auftritt. Abkürzend gesprochen: es gibt ein Wissens-Modul pro Einheits-Typ. Im Speicher WM ist jedes Wissens-Modul in einer Datenstruktur "Wissens-Modul" abgelegt.

Beim Wissenserwerb werden alle Wissens-Module erstellt und abgespeichert. Das Wissens-Modul für einen Einheits-Typ E-Typ faßt alles diagnoserelevante Wissen über E-Typ zusammen. Abgespeichert sind

○ ein Störungsgraph-Modul für E-Typ, der aus allen Störungen, die an E-Typauftreten können, und den kausalen Zusammenhängen unter ihnen besteht,

○ alle Abhilfen an E-Typ, die Störungen an E-Typ beseitigen,

○ alle Untersuchungen, die E-Typ gelten,

○ für jede Untersuchung deren Soll-Resultat und deren Nicht-Soll-Resultate.

"Eine Störung wird abgespeichert" bedeutet, daß eine eindeutige Kennung für die Störung im Speicher eingetragen wird.

Das Wissens-Modul für einen Einheits-Typ enthält ein Störungsgraph-Modul für den Einheits-Typ. Der Gesamt-Störungsgraph für das technische System wird durch automatisches Zusammenfügen von Kopien dieser Störungsgraph-Module erzeugt. Damit dies möglich ist, sind im Störungsgraph-Modul für den Einheits-Typ einige Störungen als logische Außen-Schnittstellen gekennzeichnet. Die Störungen, die logische Außen-Schnittstellen darstellen, werden nach ihrer Wirkrichtung für den Einheits-Typ unterschieden. Insgesamt gibt es daher folgende drei Arten von Relationen zwischen einer Störung St und einem Einheits-Typ Ein:

○ St wirkt unmittelbar von Ein nach außen (und ist damit logische Außen-Schnittstelle)

○ St wird unmittelbar von außen an Ein bewirkt (und ist damit logische Außen-Schnittstelle)

○ St beeinträchtigt Ein intern (und ist damit keine logische Außen-Schnittstelle)

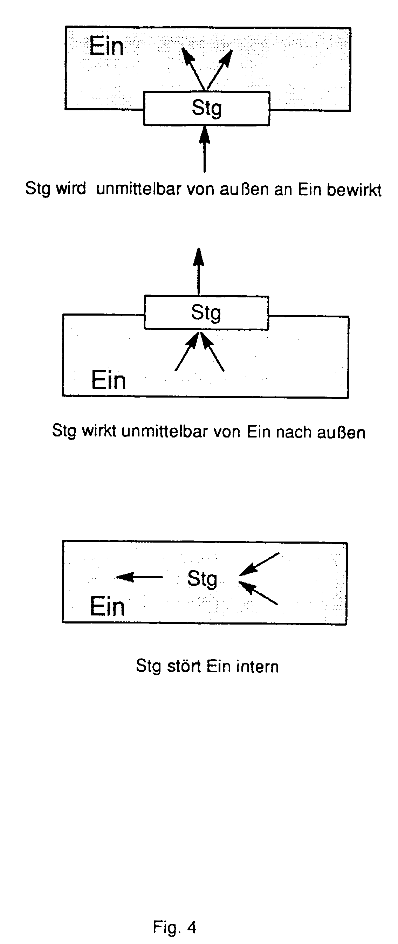

Fig. 4 illustriert diese drei Relationsarten.

Das Störungsgraph-Modul für einen Komponenten-Typ enthält nur Störungen an dem Komponenten-Typ selbst, keine an anderen Einheits-Typen. Das Störungsgraph-Modul für einen System-Typ zeigt, welche Störungen eine Störung an einer Untereinheit des System-Typs zur Folge hat. Aber er darf nicht eine Version der Untereinheit explizit benennen. Nur durch diese Einschränkung lassen sich die gerade dargelegten Anforderungen erfüllen.

Dies wird ermöglicht, indem der Begriff "Rolle im System-Typ" eingeführt wird. Jede Untereinheit des System-Typs erfüllt eine bestimmte Rolle für das Funktionieren des Systems. Genauso wie Schauspieler die Rollen in einem Theaterstück besetzen, so wird davon gesprochen, daß die Untereinheiten eines Systems die Rollen im System besetzen.

Im Wissens-Modul ist die Beschreibung, auf welche Art eine Untereinheit gestört sein kann, an die Rolle geheftet, die die Untereinheit besetzt. Eine Störung St kann je nach ihrer Wirkrichtung auf zwei Arten mit einer Rolle Ro in einem System-Typen S-Typ in Verbindung stehen:

○ St wirkt unmittelbar von Ro nach außen (und ist damit logische Außen-Schnittstelle)

○ St wird unmittelbar von außen an Ro bewirkt (und ist damit logische Außen-Schnittstelle)

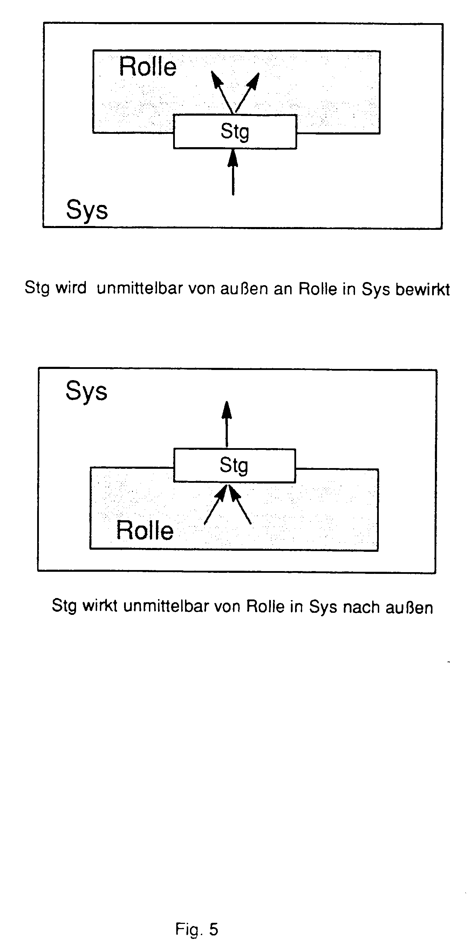

Fig. 5 illustriert diese Zusammenhänge.

Der Zusammenhang zwischen Störungen an verschiedenen Rollen in S-Typ wird im Wissens-Modul für S-Typ beschreiben, der zwischen verschiedenen Störungen an einer Rolle in S-Typ hingegen nicht im Wissens-Modul für S-Typ, sondern im Wissens-Modul für die Besetzung von Ro in S-Typ.

Das Konzept der "Rollen in einem System-Typ" ist ein Schlüssel, die Variantenvielfalt eines modularen Systems zu handhaben: Typischerweise unterscheiden sich viele Varianten des System-Typs nur in unterschiedlichen Besetzungen, nicht aber im Zusammenspiel der Rollen. Da das Störungsgraph-Modul nur Bezug auf Rollen, nicht aber auf Untereinheiten nimmt, gilt es für jede Version des System-Typs, die diese Rolle besitzt.

Störungen an einem System-Typen S-Typ können mit anderen Störungen an S-Typ oder mit Störungen an Rollen in S-Typ in Verbindung stehen. Es gibt folgende Möglichkeiten:

○ Folge einer Störung, die unmittelbar von außen an S-Typ bewirkt wird, ist entweder eine Störung, die S-Typ intern beeinträchtigt, oder eine, die unmittelbar von außen an einer Rolle in S-Typ bewirkt wird, oder eine, die unmittelbar von S-Typ nach außen wirkt.

○ Folge einer Störung, die S-Typ intern beeinträchtigt, ist entweder eine andere Störung, die S-Typ intern beeinträchtigt, oder eine, die unmittelbar von außen an einer Rolle in S-Typ bewirkt wird, oder eine, die unmittelbar von S-Typ nach außen wirkt.

○ Welche Folge eine Störung hat, die unmittelbar von S-Typ nach außen wirkt, ist nicht im Störungsgraph-Modul von S-Typ gespeichert, sondern in einem Störungsgraph-Modul eines System-Typs, in dem ein System vom Typ S-Typ eine Rolle besetzt.

○ Folge einer Störung, die unmittelbar von einer Rolle in S-Typ nach außen wirkt, ist entweder eine Störung, die S-Typ intern beeinträchtigt, oder eine, die unmittelbar von außen an einer anderen Rolle in S-Typ bewirkt wird, oder eine, die unmittelbar von S-Typ nach außen wirkt.

○ Welche Folge eine Störung hat, die unmittelbar von außen an einer Rolle in S-Typ bewirkt wird, ist nicht im Störungsgraph-Modul von S-Typ gespeichert, sondern in einem Störungsgraph-Modul eines Einheits-Typs, dem die Besetzung der Rolle angehört.

Damit der Gesamt-Störungsgraph für das technische System erstellt werden kann, muß sichergestellt werden, daß die logischen Außen-Schnittstellen des Störungsgraph-Moduls für eine Rolle zu den logischen Außen-Schnittstellen des Störungsgraph-Moduls für die Besetzung der Rolle passen. Daher ist eine Definition zu finden, wann eine Störung an einer Rolle in einem System-Typ und eine Störung an der Besetzung der Rolle einander entsprechen. Eine Definition wird als vorteilhafte Ausgestaltung des Patentanspruchs dargestellt. Die Definition muß sicherstellen, daß es zu einer Störung an einer Rolle höchstens eine entsprechende Störung an der Besetzung der Rolle gibt. Daß es gar keine Entsprechung an einer Besetzung gibt, ist zulässig und bedeutet, daß die durch die Störung an der Rolle beschriebene Funktionsstörung an der Besetzung nicht auftreten kann.

Das Wissens-Modul für einen Einheits-Typ Ein enthält alle logischen Zusammenhänge zwischen Resultaten von Untersuchungen an Ein und Störungen. Jede Störung, für die im Wissens-Modul für Ein abgespeichert ist, daß sie ein Nicht-Soll-Resultat einer Untersuchung an Ein erklärt, ist selbst Störung an Ein und damit im Wissens-Modul für Ein abgespeichert. Jede Störung, für die im Wissens-Modul für Ein abgespeichert ist, daß sie mit einem Resultat einer Untersuchung an Ein unvereinbar ist, ist selbst Störung an Ein.

Der Rechner Wb-Ersteller erzeugt automatisch eine variantenspezifische Wissensbasis. Er hat Lesezugriff auf einen Speicher Konf, in dem die aktuelle Konfiguration der Variante des technischen Systems, für das eine Wissensbasis erzeugt werden soll, beschrieben ist. Welche Informationen in Konf abgelegt sind, wird im nächsten Absatz beschrieben.

Konf enthält für jede Einheit eine bezüglich des technischen Systems eindeutige Kennung. Für jede Kennung ist abgespeichert, welchem Einheits-Typen die Einheit angehört. Falls also von einem Einheits-Typ E-Typ n Exemplare im technischen System auftreten, so enthält Konf n Kennungen für diese Exemplare, die jeweils einen Verweis auf E-Typ tragen. Weiterhin ist für ein System SYS in Konf abgelegt, durch welche Einheit jede Rolle besetzt ist; SYS kann das technische System als ganzes oder ein Teilsystem sein. Für jede Rolle Ro in SYS ist also in Konf der Zusammenhang zwischen SYS, Ro und der Einheit Ein, die in SYS Ro besetzt, abgespeichert - beispielsweise als ein Tripel (SYS, Ro, Ein).

Die gerade dargestellte Struktur der Wissens-Module im Speicher WM sowie die Informationen im Speicher Konf ist Gegenstand von Patentanspruch 5.

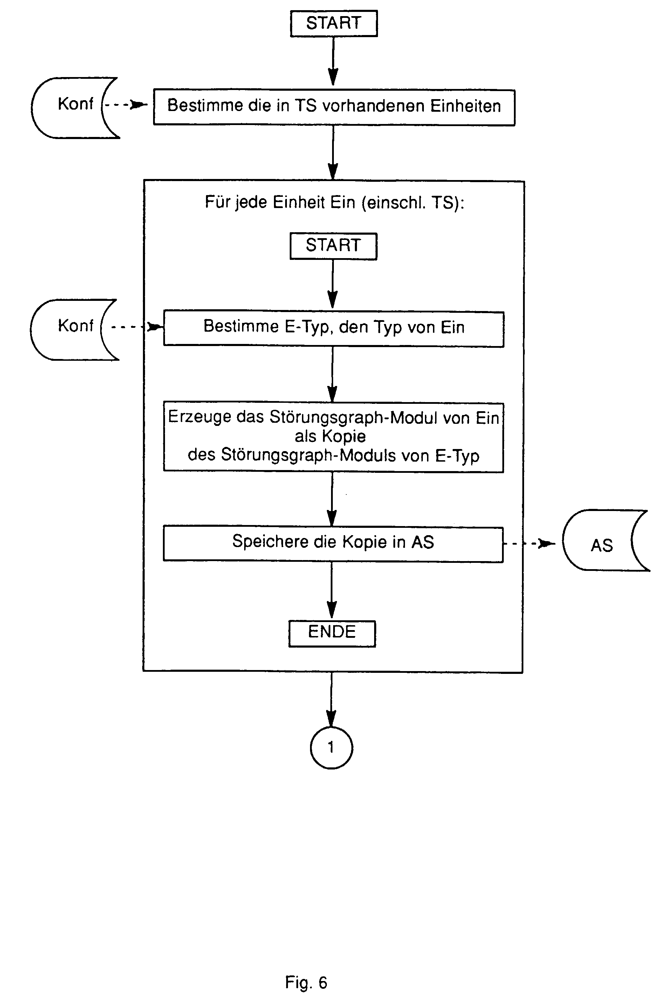

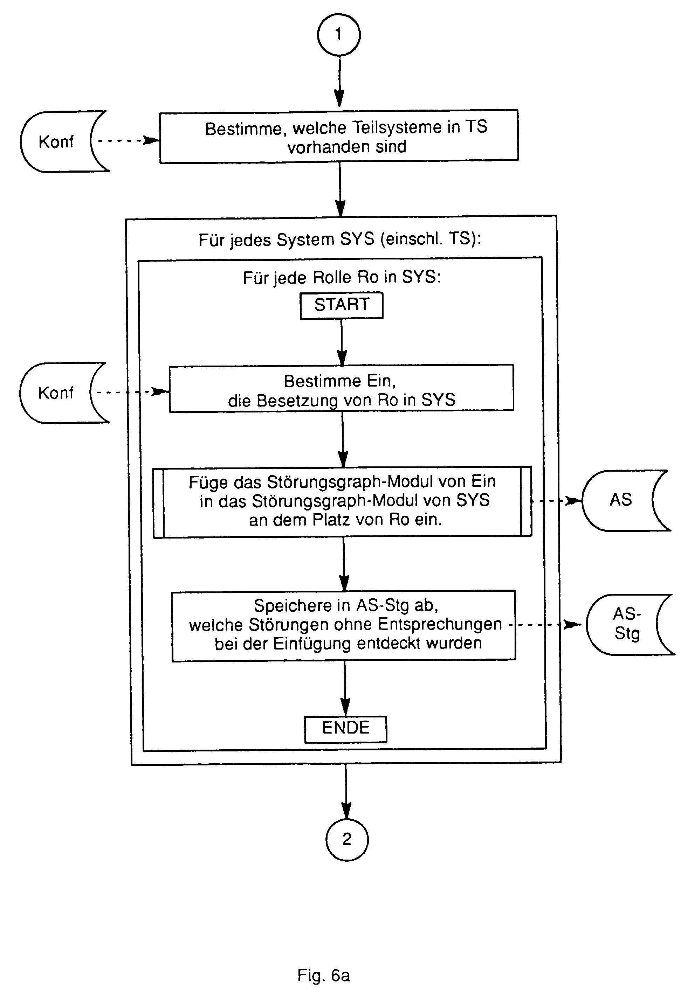

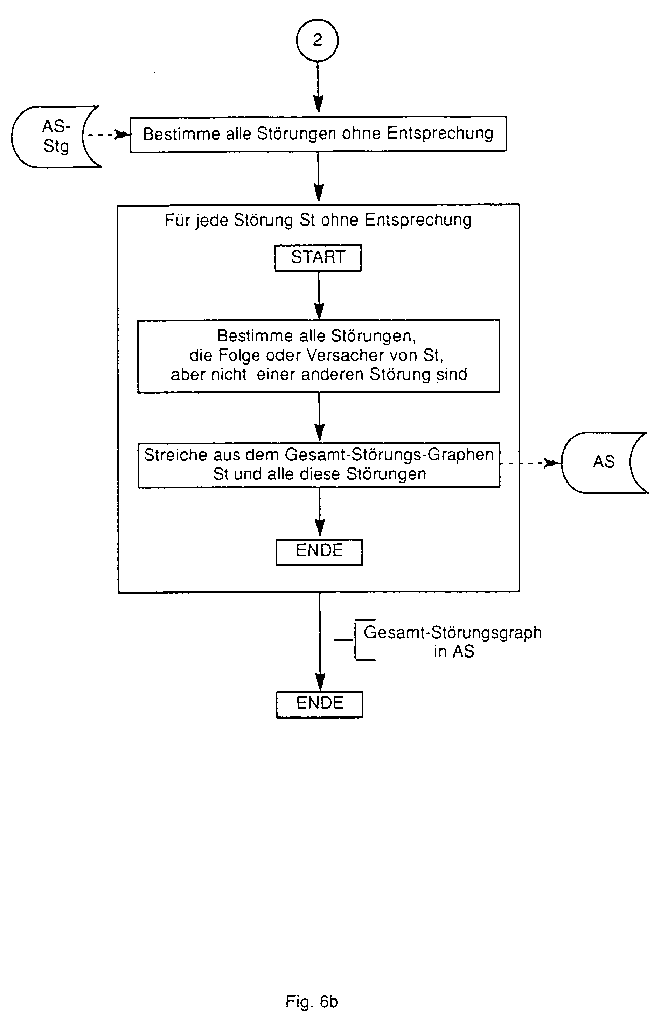

Das Vorgehen, nach denen der Rechner Wb-Ersteller die Wissensbasis für eine Variante TS des technischen Systems erzeugt, wird im folgenden und in Fig. 6 dargestellt. Wb-Ersteller hat Lesezugriff auf den Speicher WM für die Wissens-Module sowie den Speicher Konf für die aktuelle Konfiguration der Variante. Wb-Ersteller hat Schreibzugriff auf den Speicher Wb und Lese- und Schriebzugriff auf zwei Arbeitsspeicher AS und AS-Stg.

Nach Lesezugriff auf WM erzeugt Wb-Ersteller eine Kopie von dem Störungsgraph-Modul für das technische System als ganzes. Wb-Ersteller entnimmt dem Speicher Konf die Information, welche Einheiten im technischen System vorhanden sind. Für jede vorhandene Einheit Ein stellt Wb-Ersteller fest, welchem Typ die Einheit angehört, und erstellt eine Kopie des Störungsgraph-Moduls für den Einheits-Typ E-Typ von Ein. Die Kopie heißt abkürzend Störungsgraph-Modul für Ein. Präziser formuliert bedeutet dieses "Kopieren":

   o   Für jede im Wissens-Modul abgespeicherte Störung an E-Typ erzeugt Wb-Ersteller eine Kopie und versieht die Kopie mit einem Verweis auf Ein.

   o   Für jeden kausalen Zusammenhang zwischen zwei Störungen, der im Wissens-Modul abgespeichert ist, wird ein Zusammenhang der gleichen Art zwischen den jeweiligen Kopien erzeugt. Falls also im Wissens-Modul für Ein abgespeichert ist, daß St-A Folge von St-B ist, wobei St-A und St-B Störungen an E-Typ sind, so wird im Störungsgraph-Modul für Ein festgehalten, daß die Kopie von St-A mit Verweis auf Ein Folge der Kopie von St-B mit Verweis auf Ein ist.

Falls es von einem Einheits-Typ n Exemplare in der Variante des technischen Systems gibt, so werden also n Kopien des Störungsgraph-Moduls für den Einheits-Typ erstellt.

Alle Kopien von Störungsgraph-Modulen werden in AS abgespeichert.

Ist diese Arbeit vollbracht, so erstellt Wb-Ersteller den Gesamt-Störungsgraph für die Variante:

   (A) Wb-Ersteller entnimmt dem Speicher Konf die Information, welche Teilsysteme im technischen System vorhanden sind.

   (B) Für jedes SYS, wobei SYS TS selbst oder ein Teilsystem in TS ist,

   o   ermittelt Wb-Ersteller durch Lesezugriff auf Konf, welche Rollen es in SYS gibt, und ermittelt für jede Rolle, durch welche Einheit die Rolle in SYS besetzt ist.

   o   fügt Wb-Ersteller das Störungsgraph-Modul für Ein in das Störungsgraph-Modul für SYS an den Platz von Ro ein.

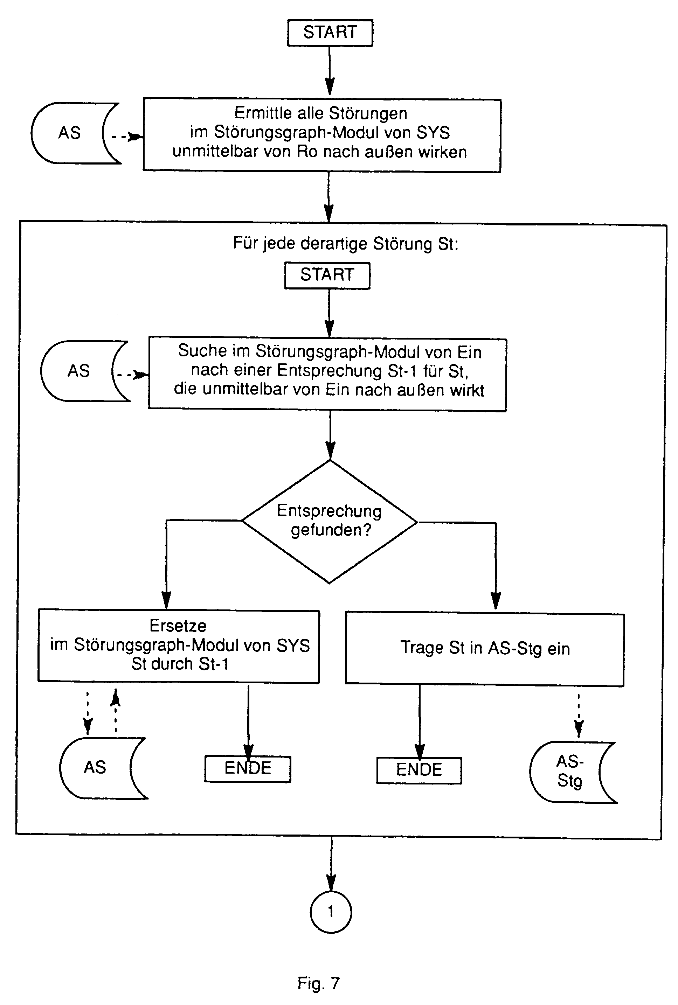

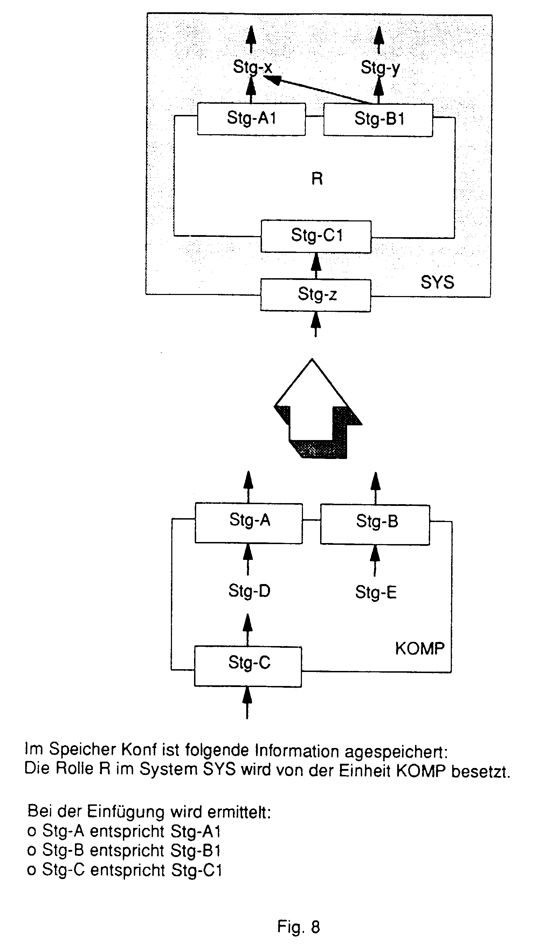

Eine derartige Einfügung wird durch Fig. 7 gezeigt und Fig. 8 veranschaulicht, sie besteht aus folgenden Schritten:

   (1) Für jede Störung St im Störungsgraph-Modul für SYS, die von Ro unmittelbar nach außen wirkt, wird im Störungsgraph-Modul für Ein nach einer Störung St-1 gesucht, die von Ein unmittelbar nach außen wirkt und die eine Entsprechung von St ist. Gemäß der Definition von "entsprechend" gibt es maximal eine Entsprechung.

   -   Falls Wb-Ersteller eine Entsprechung gefunden hat, wird im Störungsgraph-Modul für SYS St durch St-1 ersetzt. St-1 steht mindestens mit allen Störungen in kausalem Zusammenhang, mit denen St in kausalem Zusammenhang stand.

   -   Falls Wb-Ersteller keine Entsprechung gefunden hat, so wird St in den Arbeitsspeicher AS-Stg eingetragen.

(2) Für jede Störung St im Störungsgraph-Modul für SYS, die unmittelbar von außen an Ro bewirkt wird, wird im Störungsgraph-Modul für Ein nach einer Störung St-1 gesucht, die unmittelbar von außen an Ein bewirkt wird und die eine Entsprechung von St ist. Gemäß der Definition von "entsprechend" gibt es maximal eine Entsprechung.

- Falls Wb-Ersteller eine Entsprechung gefunden hat, wird im Störungsgraph-Modul für SYS St durch St-1 ersetzt. St-1 steht mindestens mit allen Störungen in kausalem Zusammenhang, mit denen St in kausalem Zusammenhang stand.
- Falls Wb-Ersteller keine Entsprechung gefunden hat, so wird St in den Arbeitsspeicher AS-Stg eingetragen.

Nach Abschluß aller Einfügungsschritte sind die Störungsgraph-Module, die zuvor in AS abgespeichert waren, zu einem einzigen Störungsgraph verknüpft. Wb-Ersteller entfernt nunmehr aus diesem Störungsgraph jede Störung, die auch in AS-Stg abgespeichert ist. Eine Störung ist dann in AS-Stg abgespeichert, wenn sie einer Rolle zugeordnet ist und Wb-Ersteller keine entsprechende Störung an der Besetzung der Rolle gefunden hat. Wb-Ersteller liest alle Störungen aus Wb-Stg ein und streicht jede eingelesene Störung selbst sowie iterativ alle Störungen, die direkte oder indirekte Folge von Stg, aber keiner anderen Störung sind, sowie alle Störungen, die direkter oder indirekter Verursacher von Stg, aber keiner anderen Störung sind, aus dem Störungs-Graph.

Nach dieser Arbeit ist der Störungsgraph für die Variante fertig erstellt; Wb-Ersteller speichert ihn im Speicher Wb ab.

Wb-Ersteller ermittelt erneut durch Lesezugriff auf den Speicher Konf, welche Einheiten im technischen System, für das eine Wissensbasis erstellt werden soll, auftreten. Für jede Einheit Ein, wobei Ein das technische System als ganzes oder eine Einheit im technischen System ist, ermittelt Wb-Konf, zu welchem Typ E-Typ Ein gehört, und kopiert das Wissens-Modul für E-Typ außer dem bereits zuvor kopieren Störungsgraph-Modul. Präziser formuliert bedeutet dieses "Kopieren":

o Für jede im Wissens-Modul abgespeicherte Abhilfe, Untersuchung und Resultat erzeugt Wb-Ersteller eine Kopie und versieht die Kopie mit einem Verweis auf Ein.
o Für jeden Zusammenhang zwischen einer Einfach-Ursache und einer Abhilfe, einer Untersuchung und einem Resultat und zwischen einer Störung und einem Resultat, der im Wissens-Modul für E-Typ abgespeichert ist, wird ein Zusammenhang der gleichen Art zwischen den jeweiligen Kopien erzeugt.

Alle dergestalt erzeugten Kopien der Wissens-Module speichert Wb-Ersteller in Wb ab. Damit ist die Wissensbasis fertig konfiguriert.

Die erfindungsgemäße Einrichtung löst die zu Beginn der Beschreibung aufgestellte Aufgabe, effizient Wissensbasen für jede Variante einer Klasse technischer Systeme zu erstellen. Man muß einmal ein Wissens-Modul für jeden Einheits-Typ erstellen. Für jede Variante, für die eine Wissensbasis erstellt werden soll, muß man die aktuelle Konfiguration erfindungsgemäß beschreiben. Ein Wissensbasis-Konfigurations-System, das Lesezugriff auf alle Wissens-Module und alle aktuellen Konfigurationen hat, erstellt dann vollautomatisch alle benötigten Wissensbasis.

Falls in einer Variante eine Einheit durch eine andersartige Einheit ersetzt wird, so wird die neue Konfiguration der Variante erfindungsgemäß beschrieben. Dann erzeugt das Wissensbasis-Konfigurations-System automatisch eine komplette neue Wissensbasis für die Variante.

Die erfindungsgemäße Einrichtung ist geeignet, automatisch aus Störungsgraph-Modulen und der aktuellen Konfiguration von TS ein Fehlermodell, nämlich einen Gesamt-Störungsgraph für TS zu erzeugen (Patentanspruch 4). Um diese Aufgabe zu lösen, braucht ein Wissens-Modul nur den Störungsgraph-Modul für den jeweiligen Einheits-Typ zu enthalten. Das Verfahren arbeitet zunächst wie das, mit dem eine Wissensbasis für ein Expertensystem erstellt wird. Es hat sein Ziel hingegen schon erreicht und bricht ab, wenn der Gesamt-Störungsgraph für TS vollständig erzeugt ist.

**Vorteilhafte Ausgestaltung**

Die erfindungsgemäße Einrichtung liefert einen Störungsgraph und alle weiteren Informationen, damit ein Expertensystem das Fehlersuchbaum-Verfahren anwenden kann.

Dieser prinzipiell gangbare Weg hat jedoch einen gravierenden Nachteil: Damit ein Expertensystem von dem Knoten, den es aktuell erreicht hat, zu einem Blatt gelangen kann, muß es vom Knoten zu einem seiner Nachfolger wechseln. Oft ist es nicht möglich, aufgrund der gewonnenen Resultate eindeutig einen der Nachfolger zu identifizieren. Dann muß das Expertensystem eine "Hypothese generieren", also probeweise die Fehlersuche in einem der Nachfolger fortsetzen. Erweist sich später die Hypothese als falsch, muß das Expertensystem zum Knoten zurückkehren, also ein sogenanntes "Backtracking" durchführen, was zeitaufwendig sein und zu Inkonsistenzen führen kann.

Folgende Gründe können dafür verantwortlich sein, daß das Expertensystem nicht eindeutig einen Nachfolger des erreichten Knotens identifizieren kann:

o Eine Untersuchung, deren Resultate zwischen den Nachfolgern zu differenzieren vermag, gibt es nicht.
o Da eine Mehrfach-Ursache vorliegt, werden mehrere Nachfolger identifiziert.

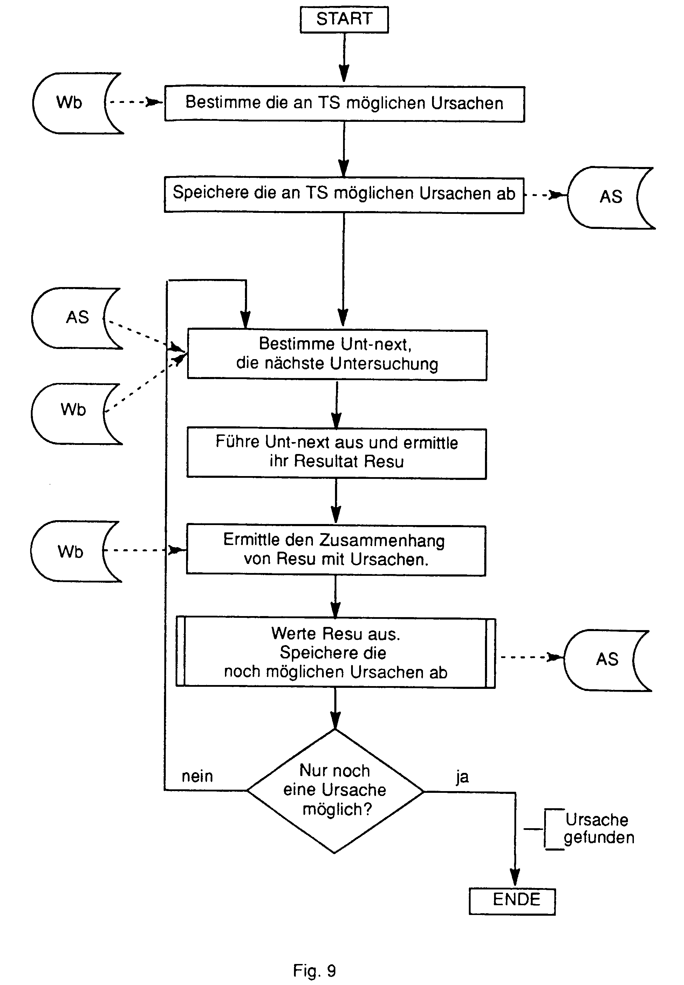

Daher wird in den Unteranspruch 6 ein anderer Weg begangen. Das Expertensystem "navigiert" nicht im Störungsgraphen mit dem Ziel, ein Blatt zu erreichen. Vielmehr diagnostiziert das Expertensystem das technische System nach einem Verfahren, das Figur 9 illustriert und das nicht nur eine Einfach-, sondern auch eine Mehrfach-Ursache durch eine einzige Diagnose zu finden vermag.

Während der Diagnose hat das Expertensystem Lese-und Schreibzugriff auf einen Arbeitsspeicher AS-erkl, in dem alle noch möglichen Ursachen angespeichert sind. "Noch möglich" ist eine Ursache, wenn sie jedes im bisherigen Verlauf der Diagnose gewonnenes Nicht-Soll-Resultat erklärt und mit keinem unvereinbar ist. Eine Mehrfach-Ursache erklärt ein Resultat, wenn mindestens eine der Einfach-Ursachen, aus denen die Mehrfach-Ursache besteht, das Resultat erklärt. Sie ist mit einem Resultat unvereinbar, wenn mindestens eine ihrer Einfach-Ursachen mit dem Resultat unvereinbar ist. Eine Mehrfach-Ursache wird dann in Betracht gezogen, wenn sie noch möglich ist, jedoch keine ihrer Einzel-Ursachen für sich noch möglich ist.

In einen zweiten Arbeitsspeicher AS-unver trägt das Expertensystem jede Ursachen ein, die mit einem gewonnen Resultat unvereinbar ist.

Das Expertensystem geht bei der Diagnose folgendermaßen vor:

o Zu Beginn der Diagnose sind noch alle Ursachen möglich. In den Arbeitsspeicher AS trägt das Expertensystem daher jedes Blatt des Störungsgraphen ein.

o Das Expertensystem wiederholt die folgende Abfolge von Schritten so lange, bis im Arbeitsspeicher AS-erkl nur noch eine einzige Ursache enthalten ist:

(1) Das Expertensystem bestimmt, welche Untersuchung als nächstes durchgeführt wird

(2) Das Expertensystem selber oder ein Mensch führt diese Untersuchung durch und ermittelt, welche der möglichen Resultate die Untersuchung aktuell hat.

(3) Das Expertensystem wertet das in Schritt (2) gewonnene Resultat aus und ändert den Inhalt von AS-erkl ab. Wie dies geschieht, wird im nächsten Absatz beschrieben.

(4) Das Expertensystem prüft, wie viele Ursachen sich jetzt in AS-erkl befinden.

o Sobald in AS nur noch eine einzige Ursache enthalten ist, ist diese Ursache als tatsächlich vorliegend identifiziert. Für jede ihrer Einfach-Ursachen wird die zugeordnete Abhilfe entweder automatisch vom Expertensystem ausgeführt oder einem Menschen zur Ausführung vorgeschlagen.

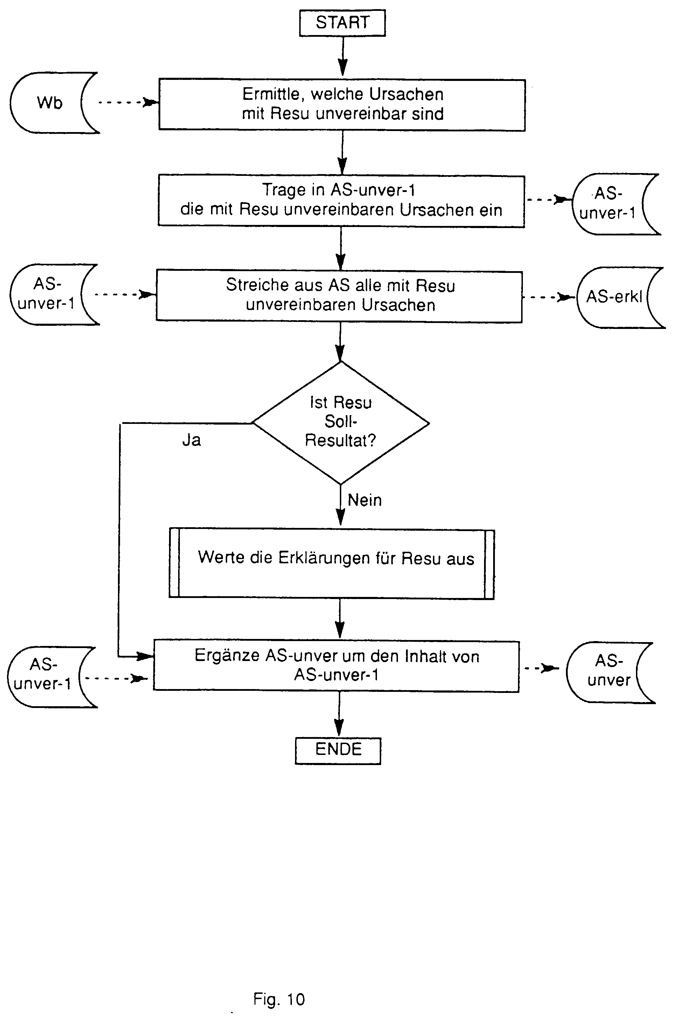

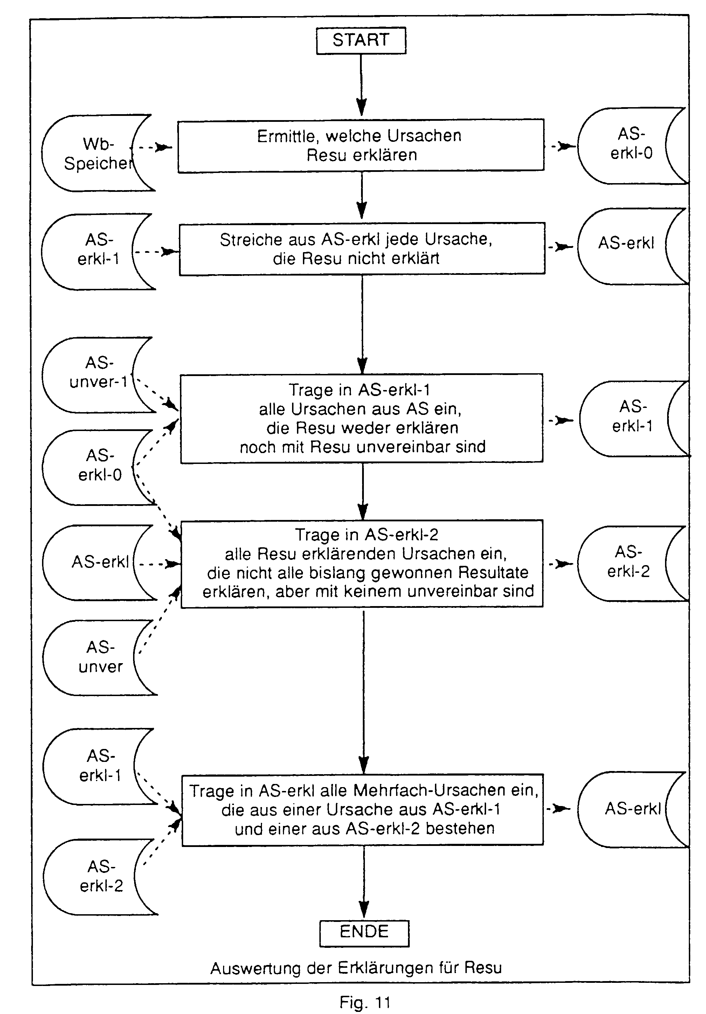

Fig. 10 und Fig. 11 illustrieren die Arbeitsschritte, durch die ein Resultat Resu ausgewertet und das Auswertungs-Ergebnis in den Arbeitsspeicher AS-erkl geschrieben wird:

Das Resultat Resu wird folgendermaßen ausgewertet:

o Das Expertensystem ermittelt, welche Ursachen mit Resu unvereinbar sind.

o Das Expertensystem streicht aus AS-erkl alle Ursachen, die mit Resu unvereinbar sind.

o Das Expertensystem stellt fest, ob Resu das Soll-Resultat oder ein Nicht-Soll-Resultat derjenigen Untersuchung ist, die Resu lieferte

o Falls es ein Nicht-Soll-Resultat ist, so macht das Expertensystem folgendes:

- Es ermittelt, welche Ursachen Resu erklären.
- Es streicht aus AS-erkl alle Ursachen, die Resu nicht erklären.
- Es ergänzt AS-erkl um jede mögliche Mehrfach-Ursache, die

- aus einer Ursache aus AS-erkl, die Resu nicht erklärt, aber auch nicht mit Resu unvereinbar ist
- und einer Ursache, die Resu erklärt und die weder in AS-erkl noch in AS-unver enthalten ist, d. h. die zwar nicht alle bisher gewonnenn Resultate erklärt, aber mit keinem unvereinbar ist

besteht.

o Das Expertensystem ergänzt AS-unver um alle Ursachen, die mit Resu unvereinbar sind.

Damit das Expertensystem ein resultat Resu auswerten kann, muß die Information verfügbar sein, welche Ursachen es erklären und welche Zusammenhänge mit ihm unvereinbar sind. Diese Informationen gewinnt das Expertensystem, indem es die in der Wissensbasis abgespeicherten Zusammenhänge zwischen Resu und Störungen kombiniert mit dem Gesamt-Störungsgraphen für das technische System. Es wendet diese Grundsätze an:

(1) Falls eine Störung St ein Resultat Resu erklärt, so erklärt auch jeder Verursacher von St Resu.

(2) Falls eine Störung St mit einem Resultat Resu unvereinbar ist, so ist ein Verursacher St-1 von St

Der Grundsatz (1) wird folgendermaßen genutzt, um zu ermitteln, welche Ursachen Resu erklären:

(A) Ermittelt wird, welche Störungen in der Wissensbasis als Erklärungen von Resu abgespeichert sind.

(B) Für jede Erklärung St-E, die selbst nicht Ursache ist, werden die Ursachen ermittelt, die St-E verursachen: Es sind alle Blätter desjenigen Astes des Störungsgraphen, dessen Wurzel St-E ist.

(C) Jede Ursache, die entweder direkt in der Wissensbasis als Erklärung von Resu abgespeichert ist oder die in Schritt (B) mindestens einmal gefunden wurde, erklärt Resu.

Der Grundsatz (2) wird folgendermaßen genutzt, um zu ermitteln, welche Ursachen mit Resu unvereinbar sind:

(A) Ermittelt wird, für welche Störungen in der Wissensbasis abgespeichert ist, daß sie mit Resu unvereinbar sind.

(B) Für jede mit Resu unvereinbare Störung St-E, die selbst nicht Ursache ist, werden die Ursachen ermittelt, die St-E verursachen: Es sind alle Blätter desjenigen Astes des Störungsgraphen, dessen Wurzel St-E ist.

(C) Eine Ursache Urs, die in (C) als unvereinbar ermittelt wurde, ist dann mit Resu unvereinbar, wenn jede Folge von Urs entweder selbst mit Resu unvereinbar ist oder Verursacher einer mit Resu unvereinbaren Störung ist.

(D) Außerdem ist jede Ursache mit Resu unvereinbar. die direkt in der Wissensbasis als mit Resu unvereinbar abgespeichert ist.

Eine vorteilhafte Ausgestaltung der Erfindung ist die, daß ein Rechner Ex in einer ersten Phase aus der automatisch erzeugten Wissensbasis für das zu diagnostizierende technische System TS gerade die Informationen "extrahiert", die für die erfindungsgemäße Diagnosestrategie benötigt werden, und in einem Speicher Wb-ex ablegt. Nach der Arbeit von Ex ist in Wb-ex

o abgespeichert, welche Einfach-Ursachen an TS und seinen Modulen auftreten können,
o für jede dieser Ursachen abgespeichert, durch welche Abhilfe die Ursache beseitigt wird,
o abgespeichert, welche Untersuchungen an TS und seinen Modulen im Verlaufe einer Diagnose durchgeführt werden können,
o für jede dieser Untersuchungen abgespeichert, welches Soll-Resultat und welche Nicht-Soll-Resultate die Untersuchung hat,
o für jedes Resultat abgespeichert, mit welchen Ursachen es unvereinbar ist,
o für jedes Nicht-Soll-Resultat zusätzlich abgespeichert, durch welche Ursachen es erklärt wird.

In einer zweiten Phase arbeitet das Expertensystem nach der erfindungsgemäßen Diagnosestrategie und hat dabei Lesezugriff auf den Speicher Wb-ex. Die "eigentliche" Wissensbasis, die der Rechner Wb-Ersteller erzeugte und im Speicher Wb ablegte, benötigt das Expertensystem nicht. Dieses Vorgehen ist von Vorteil, denn die Extraktion braucht nur einmal zu erfolgen, und das Ergebnis der Extaktion kann für jede Diagnose von TS wiederverwendet werden, solange an TS keine diagnoserelevante Änderung vorgenommen wird. Außerdem benötigt das Extraktions-Ergebnis weniger Speicherplatz als die Original-Wissensbasis.

Wie soll das Expertensystem während einer Diagnose bestimmen, welche Untersuchung als nächstes durchzuführen ist?: Eine Möglichkeit ist es, den Benutzer zu fragen. Dies würde unerfahrene Benutzer aber möglicherweise überfordern. Vorteilhaft ist es, daß das Expertensystem dann, wenn der Benutzer keine Auswahl treffen will oder kann, selbst automatisch die jeweils nächste Untersuchung bestimmt. Eine geeignete Auswahlstrategie verkürzt die Dauer der Diagnose entscheidend.

Eine vorteilhafte Ausgestaltung der Erfindung, der Patentanspruch 8 gilt, ist die: Das Expertensystem wählt die Untersuchung aus, die das größte Verhältnis zwischen dem Nutzen und den Kosten hat. Hierzu berechnet das Expertensystem für jede noch in Betracht kommende Untersuchung je eine numerische Bewertung für den Nutzen N(Unt) bei den noch möglichen Ursachen und die Kosten K(Unt) und setzt dann N(Unt) und K(Unt) ins Verhältnis. Ausgewählt wird die Untersucung mit dem größten Verhältnis.

Der Nutzen einer Untersuchung Unt wird als zu erwartender Informationsgewinn gemäß eines Verfahrens, das aus der Informationstheorie bekannt ist, bewertet. Sei UM die Menge der vor Durchführung von Unt noch möglichen Ursachen. Seien Resu-1, ..., Resu-n die möglichen Resultate von Unt, und sei für i=1,...,n UM-i die Menge der Ursachen, die dann noch möglich sind, wenn das Resultat Resu-i gewonnen wird. Dann ist

$$N(Unt) = q\text{-}1 * IG\text{-}1 + ... + q\text{-}n * IG\text{-}n,$$

wobei für i=1,...,n q-i die bedingte Wahrscheinlichkeit ist, daß Unt das Resultat Resu-i hat, falls alle Ursachen in UM und keine anderen Ursachen noch möglich sind, und
IG-i = - Id[P(UM-i)/P(UM)] der Informationsgewinn durch das Resultat Resu-i ist.

Um N(Unt) für eine Untersuchung Unt zu bestimmen, wird eine Charakterisierung der Auftritts-Häufigkeit jeder Einzel-Ursache benötigt, um daraus die Auftritts-Wahrscheinlichkeit jeder noch möglichen Ursache zu berechnen. Um K(Unt) zu bestimmen, wird eine Charakterisierung der Kosten benötigt, die die Durchführung von Unt verursacht.

Um eine systematische Gliederung der Informationen über Einheits-Typen zu erreichen und die Zahl der Eintragungen zu verkleinem, werden ähnliche Einheits-Typen in Oberklassen zusammengefaßt. Bei den Oberklassen werden alle gemeinsamen Informationen notiert, während bei dem Einheits-Typ selbst die individuellen Informationen einschließlich der Zugehörigkeit zu Oberklassen eingetragen werden. Zum Wissens-Modul für einen Einheits-Typen Ein gehört die Information, welche Oberklassen Ein besitzt. Diese Vorgehensweise ist bekannt als taxonomische Organisation der Diagnose-Informationen, denn unter den Einheits-Typen wird eine Taxonomie (Verwandtschafts-Hierarchie) aufgestellt. Diese Taxonomie bildet einen gerichteten Graphen mit Wurzel, dessen Knoten für Einheits-Typen und dessen Kanten für die Relation "hat die Oberklassen" stehen. Die Wurzel steht für "Einheits-Typ", die Blätter für tatsächlich verwendete Einheits-Typen.

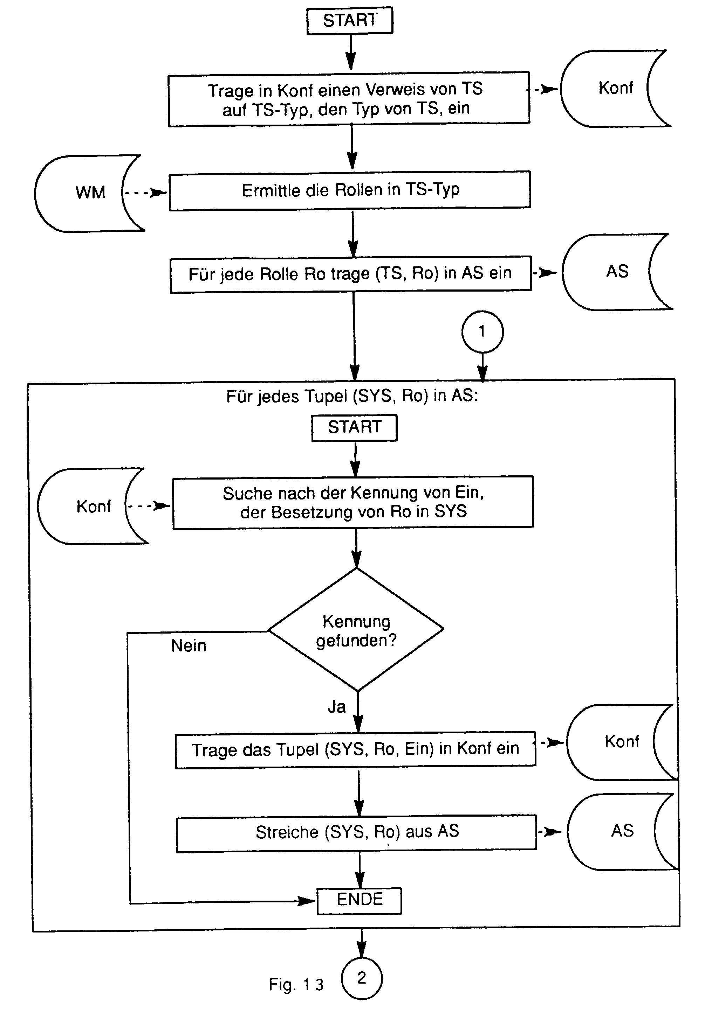

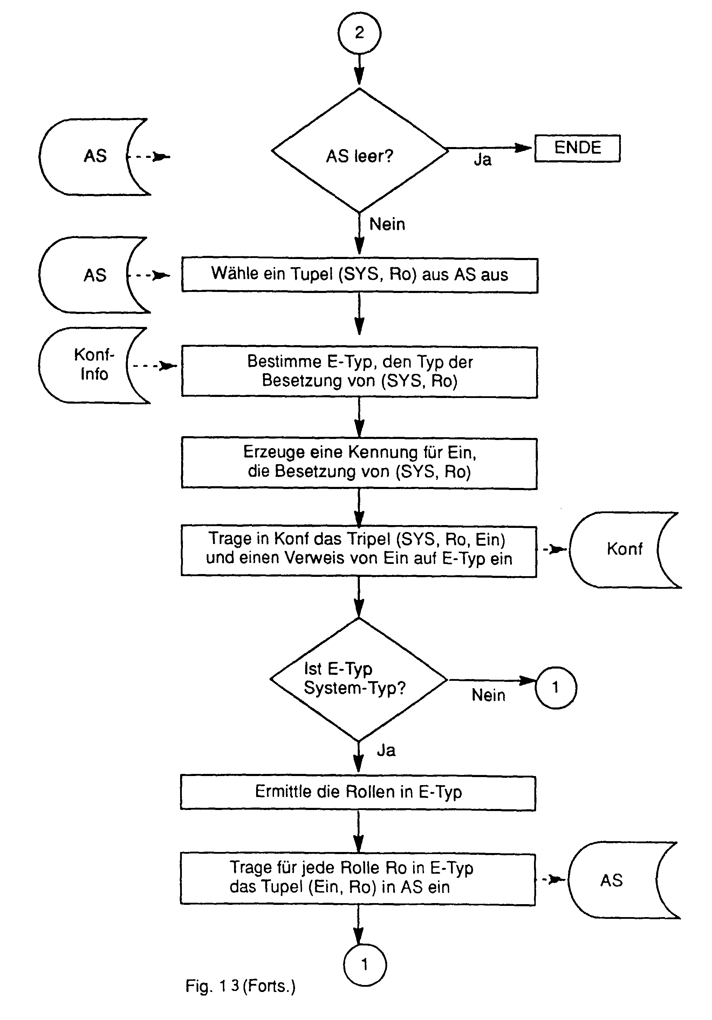

An Fig. 13 wird erläutert, wie auf Informationen über einen Einheits-Typ E-Typ zugegriffen wird. Das Grundverfahren besteht darin, eine benötigte Information rekursiv aus den Informationen über E-Typ sowie über den Oberklassen von E-Typ "zusammenzusammeln".

Als Beispiel sei die Information gesucht, welche Rollen in E-Typ erfüllt sein müssen, damit E-Typ seine Soll-Funktion erfüllen kann. Dazu wird zunächst im Wissens-Modul für E-Typ selber ermittelt, welche Rollen in E-Typ dort abgespeichert sind, und diese Rollen werden zwischengespeichert. Danach festgestellt, welche Oberklassen E-Typ besitzt. Für jede Oberklasse E-Typ-ob wird im Wissens-Modul für E-Typ-ob ermittelt, welche Rollen in E-Typ-ob dort abgespeichert sind, und der Zwischenspeicher für Rollen wird ergänzt. Dieses Vorgehen wird für die Oberklassen von E-Typ-ob fortgesetzt, es ist beendet, wenn die Wurzel des Taxonomie-Baumes erreicht ist.

Die vorteilhafte Ausgestaltung der Erfindung, der der Patentanspruch 14 gilt, löst das Problem, wie zum Diagnosezeitpunkt gewährleistet ist, daß das Expertensystem zum Diagnosezeitpunkt Zugriff auf den Speicher Konf für die aktuelle Konfiguration des zu diagnostizierenden technischen Systems hat und daß dieser Speicher mit der tatsächlichen Konfiguration übereinstimmt. Dieses Problem tritt z. B. dann auf, wenn das Expertensystem in einer KFz-Werkstatt arbeitet.

Die vorteilhafte Ausgestaltung der Erfindung sieht vor, daß der Speicher Konf in dem zu diagnostizierenden technischen Sytem selbst enthalten ist. Bei Auslieferung eines Exemplars eines technischen Systems wird der Speicher Konf mit den erfindungsgemäß strukturierten Informationen über dessen Konfiguration gefüllt. Immer dann, wenn ein Modul des Exemplars durch ein andersartiges ersetzt wird, wird der Inhalt des Speichers Konf aktualisiert.

Ein weitere Anforderung wird durch diejenige vorteilhafte Ausgestaltung der Erfindung, der der Patentanspruch 14 gilt, behandelt: Gewährleistet sein muß, daß das Expertensystem zum Diagnosezeitpunkt Lesezugriff auf jedes Wissens-Modul für einen Einheits-Typ hat, der im zu diagnostizierenden technischen System verwendet wird. Beispielsweise im Falle des Expertensystems in der KFz-Werkstatt kann dies dann, wenn alle Wissens-Module in der KFz-Werkstatt selber abgespeichert sind, logistische Probleme (bei der "Auslieferung" der Wissens-Module) und Speicherplatzprobleme aufwerfen, insbesondere dann, wenn technische Änderungen an Einheits-Typen häufig erzwingen, daß neue Versionen von Wissens-Modulen bereitgestellt werden. Falls man hingegen jedes Wissens-Module nur einmal zentral abspeichert, so müssen zum Diagnosezeitpunkt viele Daten schnell dem Expertensystem verfügbar gemacht werden.

Die vorteilhafte Ausgestaltung der Erfindung (Patentanspruch 6) sieht vor, daß im technischen System selbst alle benötigten Wissens-Module abgespeichert sind. Ein Vorgehen, diese Idee zu realisieren, ist die, daß in jeder Einheit Ein das Wissens-Modul für den Typ von Ein abgespeichert ist. Wird eine Einheit durch eine andere ersetzt, so muß man nur sicherstellen, daß auch die neue Einheit "ihr" Wissens-Modul enthält, um zu gewährleisten, daß dem Expertensystem auch nach dem Austausch alle Wissens-Module zur Verfügung stehen. Speicherplatz wird gespart, wenn speicherplatzaufwendige Informationen wie z. B. Text im technischen System codiert abgelegt werden. Man muß dan sicherstellen, daß das Expertensystem über die notwendigen Informationen verfügt, die Codierung zu entschlüsseln, z. B. indem das Expertensystem Lesezugriff auf eine Tabelle hat, durch die Textelemente und dazugehörender Code verknüpft sind.

Beispielsweise bei der rechnerunterstützten Diagnose in der KFz-Werkstatt muß ein Expertensystem alle oder zumindest viele Varianten eines technischen Systems diagnostizieren können. Bedeutenden Zeitbedarf kann es erfordern und große logistische und Speicherplatzprobleme kann es z. B. im Falle des Expertensystems in der KFz-Werkstatt aufwerfen, wenn die Wissensbasis für jede zu diagnostizierende Variante vorab zentral erstellt und an alle Einsatzorte ausgeliefert wird; große Daten sind schnell zu übertragen, wenn jede Wissensbasis nur zentral gehalten wird und das Expertensystem sich im Diagnosefall Lesezugriff auf die zental gespeicherten Wissensbasen verschaffen muß.

Daher ist es dann, wenn ein Expertensystem in der Lage sein muß, mehrere Varianten zu diagnostizieren, vorteilhaft, daß erst zum Diagnosezeitpunkt die Wissensbasis für die aktuell zu diagnostizierende Variante erzeugt wird (Patentanspruch 12). Um zeitraubende Datenübertragungen zu vermeiden, konfiguriert zweckmäßigerweise dasselbe Soft- und Hardwaresystem zunächst die Wissensbasis für die Variante und führt dann mit dieser Wissensbasis die Diagnose durch.

Die erfindungsgemäße Einrichtung benötigt einen Speicher Konf, der folgende Informationen über die Variante TS des technischen Systems, für die eine Wissensbasis erstellt werden soll, enthält:

o  welche Einheiten in TS vorhanden sind,

o von welchem Typ TS ist,
o für jede Einheit Ein in TS, von welchem Typ Ein ist, und
o für jedes SYS, wobei SYS TS selber oder ein System in TS ist, und für jede Rolle in SYS die Kennzeichnung, welche Einheit in SYS diese Rolle besetzt.

Zwar ist es im Prinzip möglich, diese Informationen "von Hand" zu erzeugen. Aber sie sind charakteristisch für die Variante TS und können nicht für andere Varianten wiederverwendet werden. Darüber hinaus lassen sich Ähnlichkeiten zwischen verschiedenen Teilsystemen gleichen Typ in der Variante nicht systematisch ausnutzen. Daher ist es vorteilhaft, wenn der Inhalt von Konf automatisch aus Informationen erzeugt wird, die den Einheits-Typen und nicht den Einheits-Exemplaren zugeordnet sind.

Im folgenden wird beschrieben, welche Konfigurations-Informationen jedem Einheits-Typen zusätzlich zu seinem Wissens-Modul zugeordnet sind und wie aus diesen Konfigurations-Informationen automatisch die erfindungsgemäße Beschreibung der aktuellen Konfiguration des technischen Systems TS, für das eine Wissensbasis erstellt werden soll, generiert wird.

Sei S-Typ ein System-Typ, der in TS auftritt; S-Typ ist entweder der Typ, dem das technische System selber angehört, oder ein Typ eines in TS verwendeten Teilsystems. Folgende Informationen sind S-Typ zugeordnet:

(1) Für jede Rolle Ro in S-Typ ist festgelegt, welchem Einheits-Typ Ein die Besetzung von Ro angehört. Zwei Arten von Festlegungen werden unterschieden:

- Entweder ist Ro in S-Typ eine einzige unbedingte Festlegung zugeordnet, nämlich die, daß in jedem Exemplar vom Typ S-Typ die Rolle Ro durch eine Einheit vom Typ Ein besetzt ist,
- oder Ro in S-Typ sind mehrere bedingte Festlegungen zugeordnet. Eine bedingte Festlegung nennt einen Einheits-Typ Ein und als Bedingung eine Rolle Ro-1 in einem System-Typ S1-Typ. Die Festlegung bedeutet, daß in einem Exemplar Sys-Ex vom Typ S-Typ die Rolle Ro dann durch eine Einheit vom Typ Ein besetzt wird, wenn Sys-Ex die Rolle Ro-1 in einem System vom Typ S1-Typ besetzt.

(2) Für eine Rolle Ro in S-Typ kann festgelegt sein, welche anderen Rollen in einem Exemplar vom Typ S-Typ eine Besetzung von Ro ebenfalls besetzt. Der E-Motor einer Straßenbahn ist ein Beispiel für eine Einheit, die sowohl die Rolle "Antrieb" als auch die Rolle "Induktionsbremse" im technischen System "Straßenbahn" besetzt. Auch hier werden zwei Arten von Festlegungen unterschieden:

- Eine unbedingte Festlegung nennt ausschließlich eine andere Rolle Ro-1 in S-Typ. Diese Festlegung bedeutet, daß in jedem Exemplar vom Typ S-Typ diejenige Einheit, die die Rolle Ro besetzt, zugleich auch Ro-1 besetzt.
- Eine bedingte Festlegung nennt eine andere Rolle Ro-1 in S-Typ und als Bedingung eine Rolle Ro-2 in einem anderen System-Typen S2-Typ. Die Festlegung bedeutet, daß in einem Exemplar Sys-Ex des Typs S-Typ die Besetzung von Ro dann zugleich Ro-1 besetzt, wenn Sys-Ex die Rolle Ro-2 in einem System vom Typ S2-Typ besetzt.

(3) Für eine Rolle Ro in S-Typ kann festgelegt sein, welche Rollen in anderen Systemen eine Besetzung von Ro in einem Exemplar vom Typ S-Typ ebenfalls besetzt. Zwei Arten von Festlegungen werden unterschieden:

- Eine unbedingte Festlegung nennt ausschließlich eine Rolle Ro-1 in einem anderen System-Typen S1-Typ. Diese Festlegung bedeutet, daß diejenige Einheit Ein, die in jedem Exemplar vom Typ S-Typ die Rolle Ro besetzt, zugleich auch in jedem Exemplar vom Typ S1-Typ die Rolle Ro-1 besetzt. Die Festlegung darf nur dann getroffen werden, wenn es nur eine einzige derartige Einheit Ein gibt.
- Eine bedingte Festlegung nennt eine Rolle Ro-1 in einem anderen System-Typen S1-Typ und

- entweder nur eine Bedingung für S-Typ, bestehend aus einer Rolle Ro-2 in einem von S-Typ verschiedenen System-Typen S2-Typ (Bedingung vom Typ I)
- oder nur eine Bedingung für S1-Typ, bestehend aus einer Rolle Ro-2 in einem von S1-Typ verschiedenen System-Typen S2-Typ (Bedingung vom Typ II)
- oder je eine Bedingung für S-Typ und eine für S1-Typ, wobei die erste Bedingung aus einer Rolle Ro-2 in einem von S-Typ verschiedenen System-Typen S2-Typ und die zweite Bedingung aus einer Rolle Ro-3 in einem von S1-Typ verschiedenen System-Typen S3-Typ besteht (Bedingung vom Typ III).

Diese bedingte Festlegung bedeutet, daß diejenige Einheit Ein, die in einem Exemplar Sys-ex vom Typ S-Typ die Rolle Ro besetzt, immer dann zusätzlich in einem Exemplar Sys-1-ex vom Typ S1-Typ die Rolle Ro-1 besetzt, wenn

- Sys-ex in einem Exemplar vom Typ S2-Typ die Rolle Ro-2 besetzt

- bzw. Sys-1-ex in einem Exemplar vom Typ S2-Typ die Rolle Ro-2 besetzt
- bzw. sowohl Sys-ex in einem Exemplar vom Typ S2-Typ die Rolle Ro-2 besetzt als auch Sys-1-ex in einem Exemplar vom Typ S2-Typ die Rolle Ro-2 besetzt.

Die Konfigurations-Informationen sind zwar - genau wie die erfindungsgemäß strukturierten Wissens-Module - Einheits-Typen zugeordnet. Jedoch hängen die Konfigurations-Informationen über einen System-Typ S-Typ - im Gegensatz zu denen im Wissens-Modul für S-Typ - ab von der Verwendung eines Exemplars Sys-Ex vom Typ S-Typ und von der Version der Untereinheiten in Sys-Ex. Daher werden sie zweckmäßigerweise in einem eigenen Speicher Konf-Info gehalten. Der Strukturierung der Informationen in Konf-Info gilt Patentanspruch 9.

Die erfindungsgemäß aufgebaute Beschreibung der aktuellen Konfiguration eines technischen Systems TS wird durch einen Rechner Konf-R generiert und in einem Speicher Konf abgelegt. Konf-R hat Lesezugriff auf den erfindungsgemäß strukturierten Speicher WM mit den Wissens-Modulen, auf den gemäß der vorteilhaften Ausgestaltung strukturierten Speicher Konf-Info, Schreibzugriff auf den Speicher Konf, der nach der Arbeit von Konf-R die aktuelle Konfiguration enthält, und Lese- und Schreibzugriff auf einen Arbeitsspeicher AS.

Damit der Rechner Konf-R arbeiten kann, muß ein Verfahren entwickelt und von Konf-R angewendet werden, um automatisch für jede Einheit Ein im technischen System eine eindeutige Kennung zu erzeugen. Diese Kennung hängt zweckmäßigerweise ab vom Typ, von dem Ein ist, und - außer wenn Ein das technische System selber ist - von der Kennung eines Systems Sys-ex, in dem Ein eine Rolle besetzt, und von der Kennung dieser Rolle.

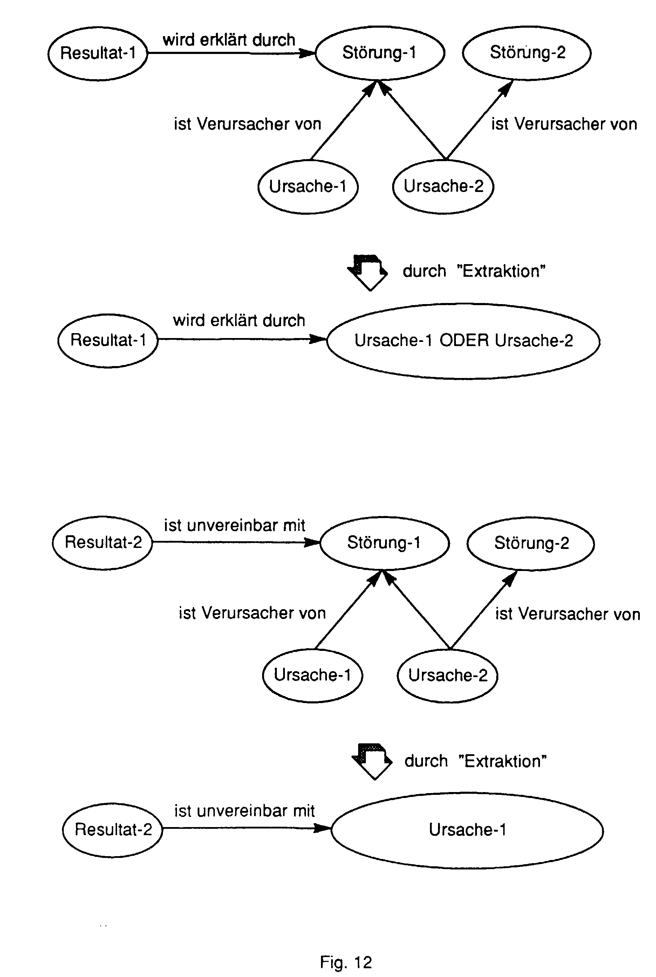

Das Vorgehen von Konf-R für ein technisches System TS erläutert Fig. 12:

Jeder Eintrag im Arbeitsspeicher AS ist ein Tupel, bestehend aus einer Kennung für TS oder einem Teilsystem SYS von TS sowie einer Kennung für eine Rolle in TS bzw. SYS. Für jedes durch ein Tupel in AS bezeichnete Paar ist die Besetzung noch zu ermitteln. Die Einträge in Konf werden von Konf-R erzeugt, jeder Eintrag ist ein Tripel, bestehend aus einer Kennung für TS oder einem Teilsystem SYS von TS, einer Kennung für eine Rolle Ro in TS bzw. SYS und einer Kennung für die Einheit Ein, die Ro in TS bzw. SYS besetzt.

o Konf-R ermittelt, welchem Typ TS-Typ TS angehört, und speichert diese Information in Konf ab
o Konf-R ermittelt durch Lesezugriff auf WM, welche Rollen in TS-Typ existieren.
o Für jede derartige Rolle Ro trägt Konf-R in AS ein Tupel ein, bestehend aus der Kennung für TS und der für Ro.

o Konf-R durchläuft die folgende Schleife so oft, bis AS leer ist:

- Konf-R ermittelt in AS jedes Tupel, das ein System SYS und eine Rolle Ro in SYS bezeichnet, für dessen Besetzung Ein die Kennung bereits erzeugt wurde. Daß die kennung für Ein bereits erzeugt wurde, ist dann möglich, wenn Ein zugleich eine andere Rolle besetzt. Wie Konf-R diese Tupel ermittelt, schildert der nächste Absatz.
- Für jedes derartige Tupel

  - schreibt Konf-R ein Tripel in Konf, das aus der Kennung von SYS, der von Ro und der von Ein besteht.
  - löscht Konf-R in AS das Tupel

- Falls AS noch Tupel enthält, so vollführt Konf-R folgende Arbeitsschritte:

  - Konf-R wählt ein anderes Tupel aus AS aus. Sei SYS das durch das Tupel bezeichnete System und Ro die bezeichnete Rolle in SYS.
  - Konf-R stellt durch Lesezugriff auf Konf fest, von welchem Typ SYS ist
  - Konf-R stellt durch Lesezugriff auf Konf-Info fest, von welchem Typ E-Typ die Besetzung Ein von Ro in SYS ist.
  - Konf-R erzeugt Konf-R eine Kennung für Ein, die von E-Typ, Ro und SYS abhängt.
  - Konf-R trägt in Konf ein Tripel ein, bestehend aus den Kennungen für SYS, Ro und Ein
  - Konf-R trägt in Konf ein, daß Ein vom Typ E-Typ ist, d. h. trägt in Konf einen Verweis von der Kennung für Ein auf die für E-Typ ein.
  - Konf-R löscht in AS das Tupel
  - Konf-R ermittelt durch Lesezugriff auf WM, ob E-Typ ein System- oder ein Komponenten-Typ ist
  - Falls E-Typ ein System-Typ ist,

    - ermittelt Konf-R alle Rollen in E-Typ
    - und trägt für jede Rolle in E-Typ eine Kennung in AS ein, die aus einer Kennung für Ein und einer für die Rolle besteht.

o Falls AS leer ist, so ist die aktuelle Konfiguration vollständig und erfindungsgemäß in Konf abgespeichert.

Durch die im folgenden beschriebenen Schritte (A) und (B) stellt Konf-R fest, ob ein Tupel im Arbeitsspeicher AS ein System und eine Rolle bezeichnet, für dessen Besetzung schon eine Kennung erzeugt wurde: Sei Sys-Ex das System und Ro die Rolle im System, aus deren Kennungen das Tupel besteht.

(A) Konf-R ermittelt den Typen S-Typ von Sys-Ex und stellt durch Lesezugriff auf den Speicher Konf-Info fest, welche Festlegungen der Art (2) für die Rolle Ro in S-Typ in Konf-Info abgespeichert sind.

- Für jede Festlegung, die Ro in S-Typ mit einer anderen Rolle Ro-1 in S-Typ verknüpft, sucht Konf-R nach einem Tripel in Konf, das aus der Kennung für Sys-Ex, der für Ro-1 und der für eine Einheit Ein besteht. Ist die Festlegung in Konf-Info eine bedingte, stellt Konf-R durch Lesezugriff auf Konf fest, ob Sys-Ex die Bedingung erfüllt. Ist die Bedingung erfüllt oder die Festlegung eine unbedingte, so ist Ein die gesuchte Besetzung, die Kennung von Ein steht in Konf.
- Findet Konf-R mehrere passende Einheiten Ein, so sind die in Konf-Info abgespeicherten Informationen widersprüchlich. Konf-R bricht seine Arbeit ab und meldet den entdeckten Widerspruch.

(B) Falls Konf-R durch Schritt A keine passende Einheit gefunden hat, so stellt Konf-R durch Lesezugriff auf den Speicher Konf-Info fest, welche Festlegungen der Art (3) für die Rolle Ro in S-Typ in Konf-Info abgespeichert sind.

- Für jede Festlegung, die Ro in S-Typ mit einer Rolle Ro-1 in einem anderen System-Typ S1-Typ verknüpft, sucht Konf-R in Konf nach allen Kennungen für Exemplare vom Typ S1-Typ. Falls es derartige Kennungen gibt, seien Sys-Ex-1, ..., Sys-Ex-n die durch die Kennungen benannten Exemplare des Typs S1-Typ.

  - Für jedes Sys-Ex-i (i=1,...,n) sucht Konf-R nach einem Tripel in Konf, das aus der Kennung für Sys-Ex-i, der für Ro-1 und der für eine Einheit Ein besteht. Ist die Festlegung eine bedingte der Art (Typ I), prüft Konf-R durch Lesezugriff auf Konf, ob Sys-Ex die Bedingung erfüllt; ist sie eine bedingte der Art (Typ II), prüft Konf-R, ob Sys-Ex-i die Bedingung erfüllt; ist sie eine bedingte der Art (Typ III), prüft Konf-R, ob sowohl Sys-Ex als auch Sys-Ex-i jeweils die Bedingung erfüllen.

  - Findet Konf-R mehrere passende Einheiten Ein, so sind die in Konf-Info abgespeicherten Informationen widersprüchlich. Konf-R bricht seine Arbeit ab und meldet den entdeckten Widerspruch.

## Patentansprüche

1. Einrichtung zur Erstellung der Wissensbasis eines Expertensystems, das ein aus Modulen bestehendes technisches System diagnostiziert,

   bestehend aus einem Rechner (Wb-Ersteller) mit Lesezugriff auf einen ersten Speicher (WM) und einen zweiten Speicher (Konf) sowie mindestens zeitweise mit Schreibzugriff auf einen dritten Speicher (Wb),

   aus Informationen über das technische System, über dessen Störungen und über dessen Diagnose, die im ersten Speicher (WM) so strukturiert abgespeichert sind, daß es

   für den Typ, dem das technische System angehört, ein Wissens-Modul gibt, das alle benötigten Informationen über den inneren Aufbau eines technischen Systems dieses Typs sowie bei Bedarf über die Störungen, Abhilfen und Untersuchungen an einem technischen System dieses Typs enthält,

   sowie für jeden Typ von Modulen, der mindestens einmal im technischen System vorkommt, jeweils ein Wissens-Modul gibt, das alle benötigten Informationen über den inneren Aufbau eines Moduls dieses Typs sowie bei Bedarf über die Störungen, Abhilfen, Untersuchungen und Resultate an einem Modul dieses Typs enthält,

   **dadurch gekennzeichnet, daß**

   im Wissens-Modul für den Typ, dem das technische System angehört, die Information enthalten ist, welche Rollen, d.h. welche durch Zuordnung eines Moduls erfüllbare Teilfunktionen, besetzt sein müssen, d.h. ein Modul zugeordnet bekommen haben müssen, damit das technische System seine Soll-Funktion erfüllen kann,

   für jeden Typ von zusammengesetzten Modulen, die in einem technischen System des Typs auftreten, im Wissens-Modul für diesen Modul-Typ die Information enthalten ist, welche Rollen in einem Modul dieses Modul-Typs besetzt sein müssen, damit das Modul seine Soll-Funktion erfüllen kann,

   für jede Rolle im technischen System und jede Rolle in jedem zusammengesetzten Modul im technischen System die Information verfügbar ist, welches Modul im technischen System bzw. im zusammengesetzten Modul die Rolle besetzt,

im zweiten Speicher (Konf) die Konfiguration des technischen Systems abgespeichert ist, und

im dritten Speicher (Wb)

o ein Wissens-Modul für das technische System als Kopie des Wissens-Moduls für den Typ, dem das technische System angehört, enthalten ist,

o für jedes Modul des technischen Systems ein eigenes Wissens-Modul als Kopie des Wissens-Moduls für den Typ, dem das Modul angehört, enthalten ist und

o jedes dergestalt gebildete Wissens-Modul für ein Modul (A) entsprechend der Rolle, die Modul (A) im zusammengesetzten Modul (B) oder im technischen System besetzt, mit dem dergestalt gebildeten Wissens-Modul für das Modul (B) bzw. für das technische System zusammengefügt ist.

2. Einrichtung nach Anspruch 1, **dadurch gekennzeichnet, daß**

im ersten Speicher (WM) für den Typ von technischen System, dem das technische System angehört, sowie für jeden Typ von Modul, das im technischen System vorkommt, eine eindeutige Kennung des Typs abgespeichert ist,

im ersten Speicher (WM) für den Typ von technischen Systemen, dem das technische System angehört, sowie für jeden Typ von Modulen, der mindestens einmal im technischen System vorkommt, abgespeichert ist,

o welche Störungen an einem technischen System bzw. jedem Modul des Typs unmittelbar nach außen wirken,

o welche Störungen an einem technischen System bzw. einem Modul des Typs unmittelbar von außen bewirkt werden,

o welche Störungen an einem technischen System bzw. einem Modul des Typs intern wirken,

o welche Störungen an einem technischen System bzw. einem Modul des Typs welche anderen Störungen an dem technischen System bzw. dem Modul zur Folge haben,

o und, bei einem Modul des Typs, ob es elementar oder zusammengesetzt ist,

im ersten Speicher (WM) für den Typ von technischen Systemen, dem das technische System angehört, sowie für jeden Typ von zusammengesetzten Modulen, der mindestens einmal im technischen System vorkommt,

o abgespeichert ist, welche Rollen im technischen System bzw. im Modul besetzt sein müssen, damit das technische System bzw. das Modul seine Soll-Funktion ausfüllen kann, und

o für jede dieser Rollen im technischen System bzw. im Modul

- abgespeichert ist, welche Störungen an der Rolle unmittelbar nach außen wirken,

- abgespeichert ist, welche Störungen an der Rolle unmittelbar von außen bewirkt werden,

- für jede Störung St an der Rolle, die unmittelbar nach außen wirkt, abgespeichert ist, welche anderen Störungen an einem technischen System bzw. einem Modul des Typs und welche Störungen an anderen Rollen in diesem technischen System bzw. in diesem Modul die Störung St zur Folge hat,

- für jede Störung St an der Rolle, die unmittelbar von außen bewirkt wird, abgespeichert ist, von welchen anderen Störungen an einem technischen System bzw. an einem Modul des Typs und von welche Störungen an anderen Rollen in diesem technischen System bzw. in diesem Modul die Störung St eine Folge ist.

3. Einrichtung nach Anspruch 1 oder 2, **dadurch gekennzeichnet, daß**

im zweiten Speicher (Konf )

o abgespeichert ist, von welchem Typ das technische System ist,

o für das technische System und für jedes zusammengesetzte Modul im technischen System abgespeichert ist, von welchem Typ das Modul ist, das die Rolle besetzt,

o und durch Kennungen oder auf anderem Wege erkennbar gemacht ist, welche Module gleichzeitig mehrere Rollen besetzen.

4. Einrichtung nach einem der Ansprüche 1, 2 oder 3, **dadurch gekennzeichnet, daß**

im ersten Speicher (WM) für jede Störung, die an einem technischen System des Typs, dem das technische System angehört, auftritt und die unmittelbar von außen bewirkt wird, eine Abhilfe abgespeichert ist,

im ersten Speicher (WM) für den Typ von technischen Systemen, dem das technische System angehört, sowie für jeden Typ von Modulen, der mindestens einmal im technischen System vorkommt,

- für jede Störung an einem technischen System bzw. einem Modul des Typs, die weder Folge einer anderen Störung am technischen System bzw. am Modul oder an einer Rolle im technischen System bzw. Modul ist noch unmittelbar von außen bewirkt wird, eine Abhilfe am technischen System bzw. Modul abgespeichert ist,

- abgespeichert ist, welche Untersuchungen an einem technischen System bzw. einem Modul des Typs im Verlaufe einer Diagnose durchgeführt werden können,

- für jede Untersuchung an einem technischen System bzw. einem Modul des Typs ihr Soll-Resultat abgespeichert ist, d. h. abgespeichert ist, welches Resultat die Untersuchung dann hat, wenn das technische System ungestört ist,

- für jede Untersuchung an einem technischen System bzw. einem Modul des Typs alle ihre Nicht-Soll-Resultate abgespeichert sind, d. h. abgespeichert ist, welche Resultate die Untersuchung außer ihrem Soll-Resultat haben kann,

- für jedes Nicht-Soll-Resultat einer Untersuchung an einem technischen System bzw. einem Modul des Typs abgespeichert ist, durch welche Störungen an dem technischen System bzw. Modul es erklärt wird,

- für jedes Resultat einer Untersuchung an einem technischen System bzw. einem Modul des Typs abgespeichert ist, mit welchen Störungen an dem technischen System bzw. Modul es unvereinbar ist.

5. Einrichtung nach einem der Ansprüche 1 bis 4,
**dadurch gekennzeichnet, daß**

im ersten Speicher (WM) für den Typ von technischen System, dem das technische System angehört, sowie für jeden Typ von Modul, das im technischen System vorkommt, eine eindeutige Kennung des Typs abgespeichert ist, und

im zweiten Speicher (Konf)

- für das technische System und für jedes Modul im technischen System je eine eindeutige Kennung abgespeichert ist und

- für jede Rolle im technische System und für jede Rolle in jedem zusammengesetzten Modul im technischen System abgespeichert ist, welche Kennung das Modul hat, das die Rolle besetzt.

6. Einrichtung nach einem der Anspruch 1 bis 4,
**dadurch gekennzeichnet, daß**

der erste Rechner (Konf-R) für das technische System und für jedes Modul im technischen System eine eindeutige Kennung erzeugt

und der erste Rechner (Konf-R) dann, wenn ein Modul zusammengesetzt ist, für jede Rolle in diesem Modul die Kennung der Besetzung der Rolle im Modul ermittelt.

7. Einrichtung nach einem der Ansprüche 1 bis 6,

bestehend aus einem ersten Rechner (Wb-Ersteller) mit Lesezugriff auf einen ersten Speicher (WM) und einen zweiten Speicher (Konf) sowie mindestens zeitweise mit Schreibzugriff auf einen dritten Speicher (Wb-zw),

aus einem zweiten Rechner (Wb-Extrahierer) mindestens zeitweise mit Lesezugriff auf den dritten Speicher (Wb-zw) und mindestens zeitweise mit Schreibzugriff auf einen vierten Speicher (Wb),
**dadurch gekennzeichnet, daß**

in einer ersten Phase der erste Rechner (Wb-Ersteller) die Wissensbasis für ein technisches System gemäß des Verfahrens nach einem der Ansprüche 1 bis 5 erstellt und im dritten Speicher (Wb-zw) abspeichert,

in einer zweiten Phase der zweite Rechner (Wb-Extrahierer)

- ermittelt, welche Einfach-Ursachen am technischen System und seinen Modulen auftreten können,

- für jede dieser Ursachen ermittelt, durch welche Abhilfe die Ursache beseitigt wird,

- ermittelt, welche Untersuchungen am technischen System und seinen Modulen im Verlaufe einer Diagnose durchgeführt werden können,

- für jede dieser Untersuchungen ermittelt, welches Soll-Resultat und welche Nicht-Soll-Resultate die Untersuchung hat,

- für jedes Resultat ermittelt, mit welchen Ursachen es unvereinbar ist,

- o für jedes Nicht-Soll-Resultat zusätzlich ermittelt, durch welche Ursachen es erklärt wird.
- o und alle diese Informationen in Wb abspeichert.

8. Einrichtung nach einem der Ansprüche 1 bis 7, **dadurch gekennzeichnet, daß** die Informationen im ersten Speicher (WM) taxonomisch geordnet sind, indem im ersten Speicher (WM) in der Beschreibung eines Modul-Typs gespeichert sein kann, der Beschreibung welchen anderen Modul-Typs die Informationen über den Modul-Typ zu entnehmen sind, wenn diese in der Beschreibung des Modul-Typs fehlen.

9. Einrichtung nach einem der Ansprüche 1 bis 8,

bestehend aus einem ersten Rechner (Konf-R) mit Lesezugriff auf einen ersten Speicher (WM) und einen zweiten Speicher (Konf-Info) und zumindest zeitweise mit Schreibzugriff auf einen dritten Speicher (Konf)

und aus einem zweiten Rechner (Wb-Ersteller) mit Lesezugriff auf einen ersten Speicher (WM), Lesezugriff auf einen dritten Speicher (Konf), mindestens zeitweise mit Schreibzugriff auf einen vierten Speicher (Wb)

**dadurch gekennzeichnet, daß**

im zweiten Speicher (Konf-Info) für den Typ von technischen Systemen, dem das technische System angehört, sowie für jeden Typ von Modulen, der mindestens einmal im technischen System vorkommt,

für jede Rolle in einem technischen System bzw. Modul dieses Typs

- o abgespeichert ist, von welchem Modul-Typ die Besetzung dieser Rolle ist
- o abgespeichert sein kann, welche anderen Rollen in dem technischen System bzw. in dem Modul eine Besetzung dieser Rolle zusätzlich besetzt, wobei diese Festlegung an eine Bedingung geknüpft sein kann,
- o abgespeichert sein kann, welche Rollen in anderen zusammengesetzten Modulen eine Besetzung dieser Rolle zusätzlich besetzt, wobei diese Festlegung an eine Bedingung geknüpft sein kann,

und in einer ersten Phase der erste Rechner (Wb-Ersteller) nach Lesezugriff auf den zweiten Speicher (Konf-Info) die Konfiguration des

technischen Systems ermittelt und im dritten Speicher (Konf) abspeichert

und danach die Wissensbasis für das technische System nach einem der Ansprüche 1 bis 8 erzeugt und im vierten Speicher (Wb) abspeichert.

10. Einrichtung zur rechnergestützten Diagnose eines aus Modulen bestehenden technisches Systems,

bestehend aus einer Teil-Einrichtung (z.B. Wb-Ersteller) mit Lesezugriff auf einen ersten Speicher (WM) und einen zweiten Speicher (Konf) sowie mindestens zeitweise mit Schreibzugriff auf einen dritten Speicher (Wb)

und einem dritten Rechner (Diag) mit mindestens zeitweisem Lesezugriff auf den dritten Speicher (Wb),

**dadurch gekennzeichnet, daß**

in einer ersten Phase die Teil-Einrichtung automatisch eine Wissensbasis für das technische System gemäß einem der Ansprüche 1 bis 9 erstellt und im dritten Speicher (Wb) abspeichert

und in einer zweiten Phase der dritte Rechner (Diag) das technische System diagnostiziert.

11. Einrichtung nach Anspruch 10,

bestehend aus einer Teil-Einrichtung (z.B. Wb-Ersteller) mit Lesezugriff auf einen ersten Speicher (WM) und einen zweiten Speicher (Konf) sowie mindestens zeitweise mit Schreibzugriff auf einen dritten Speicher (Wb)

und aus einem dritten Rechner (Diag) mit mindestens zeitweisem Lesezugriff auf den dritten Speicher (Wb) und Lese- und Schreibzugriff auf einen Arbeitsspeicher (AS),

**dadurch gekennzeichnet,** daß

in einer ersten Phase die Teil-Einrichtung (Wb-Ersteller) die Wissensbasis für ein technisches System gemäß einem der Ansprüche 1 bis 9 erstellt und im dritten Speicher (Wb) abspeichert, und

in einer zweiten Phase der dritte Rechner (Diag) das technische System diagnostiziert, indem der dritte Rechner (Diag)

- o per Lesezugriff auf den dritten Speicher (Wb) ermittelt, welche Ursachen am technischen System auftreten können, und diese Ursachen in den Arbeitsspeicher (AS) einträgt,

o danach in einer Schleife solange, wie der Arbeitsspeicher (AS) noch mehrere Ursachen enthält, die Abfolge ausführt, die daraus besteht, daß der dritte Rechner (Diag)

- eine Untersuchung automatisch ausführt oder von einem Menschen ausführen läßt,
- danach ermittelt, welches Resultat die Untersuchung hat,
- danach aus dem Arbeitsspeicher (AS) alle Ursachen streicht, die mit dem Resultat unvereinbar sind
- danach dann, wenn das Resultat ein Nicht-Soll-Resultat der Untersuchung ist,

- aus dem Arbeitsspeicher (AS) alle Ursachen streicht, die das Resultat nicht erklären,
- und den Arbeitsspeicher (AS) um alle Mehrfach-Ursachen ergänzt, die aus einer Ursache, die das Resultat erklärt, und einer Ursache, die der dritte Rechner (Diag) gerade aus dem Arbeitsspeicher (AS) gestrichen hat, besteht,

o dann, wenn im Arbeitsspeicher (AS) noch eine einzige Ursache enthalten ist,

- diese Ursache als tatsächlich vorliegend markiert und
- die zugeordnete Abhilfe automatisch durchführt,

o bzw. dann, wenn im Arbeitsspeicher (AS) keine Ursache enthalten ist, das technische System als störungsfrei markiert.

12. Einrichtung nach einem der Ansprüche 10 oder 11, **dadurch gekennzeichnet, daß** der zweite Speicher (Konf) in dem zu diagnostizierenden technischen System enthalten und erst zu dem Zeitpunkt, zu dem das technische System diagnostiziert werden soll, der erste Rechner (Wb-Ersteller) durch on-line-Zugang oder per Datenträger Lesezugriff auf den zweiten Speicher (Konf) erhält und automatisch eine Wissensbasis erzeugt.

13. Einrichtung nach einem der Ansprüche 9 bis 12, **dadurch gekennzeichnet, daß** der erste Speicher (WM) ganz oder teilweise in dem zu diagnostizierenden technischen System enthalten ist und erst zu dem Zeitpunkt, zu dem das technische System diagnostiziert werden soll, der erste Rechner (Wb-Ersteller) durch on-line-Zugang oder per Datenträger Lesezugriff auf den zweiten Speicher (Konf) erhält und automatisch eine Wissensbasis erzeugt.

14. Einrichtung nach einem der Ansprüche 9 bis 13, **dadurch gekennzeichnet, daß** der erste Rechner (Konf-R) und/oder der zweite Rechner (Wb-Ersteller) mit dem dritten Rechner (Diag) identisch ist.

15. Einrichtung nach einem der Ansprüche 9 bis 14, **dadurch gekennzeichnet, daß** der erste Rechner (Konf-R) und/oder der zweite Rechner (Wb-Ersteller) und/oder der dritte Rechner (Diag) in dem zu diagnostizierenden technischen System enthalten sind.

16. Einrichtung nach einem der Ansprüche 1 bis 15, **dadurch gekennzeichnet, daß**

im ersten Speicher (WM)

für jede Ursache, die am technischen System auftreten kann, eine Charakterisierung ihrer Auftritts-Häufigkeit abgespeichert ist, und

für jede Untersuchung. die am technischen System durchgeführt werden kann, eine Charakterisierung der Kosten ihrer Durchführung abgespeichert ist.

17. Einrichtung nach einem der Ansprüche 1 bis 16 mit einem dritten Rechner (Diag) mit mindestens zeitweisem Lesezugriff auf den dritten Speicher (Wb), **dadurch gekennzeichnet, daß** der dritte Rechner (Diag) in Abhängigkeit von den Charakterisierungen der Auftritts-Häufigkeiten aller Ursachen und Durchführungs-Kosten aller Untersuchungen diejenige Untersuchung auswählt, die das günstigste Verhältnis aus zu erwartendem Nutzen zur Differenzierung zwischen den noch möglichen Ursachen und Kosten aufweist.

18. Einrichtung zur Erstellung eines vollständigen Störungsgraphen für ein aus Modulen bestehendes technisches System, bestehend aus einem Rechner (Wb-Ersteller) mit Lesezugriff auf einen ersten Speicher (WM) und einen zweiten Speicher (Konf) sowie mindestens zeitweise mit Schreibzugriff auf einen dritten Speicher (Wb), **dadurch gekennzeichnet, daß**

im ersten Speicher (WM) alle Informationen gemäß einem der Ansprüche 1 bis 17 abgespeichert sind

und der Rechner (Wb-Ersteller) automatisch eine vollständigen Störungsgraphen für das technische System gemäß einem der Ansprüche 1 bis 17 erstellt und im dritten Speicher (Wb) abspeichert.

**Claims**

1. Equipment for compiling the knowledge base of an expert system which diagnoses a technical system consisting of modules,

   consisting of a computer (Wb compiler) with reading access to a first memory (WM) and a second memory (Konf) as well as at least temporarily with writing access to a third memory (Wb),
   from information data about the technical system, about its disturbances and about its diagnosis, which are filed so structured in the first memory (WM), that it gives a knowledge module which contains all needed information data about the internal build-up of a technical system of the type to which the technical system belongs, as well as in case of need about the disturbances, remedies and examinations at a technical system of this type,
   as well as gives a respective knowledge module which contains all needed information data about the internal build-up of a module of each type of module which occurs at least once in the technical system, as well as in case of need about the disturbances, remedies, examinations and results at a module of this type,

   characterised thereby, that

   the information data as to which roles, i.e. which partial functions that are fulfillable by association of a module, must be cast, i.e. be associated with a module, in order that the technical system can fulfil its target function, is contained in the knowledge module for the type to which the technical system belongs,
   the information data as to which roles must be cast in a module of each type of composite modules, which occur in a technical system of that type, in order that the module can fulfil its target function, is contained in the knowledge module for that module type, the information is available for each role in the technical system and each role in each composite module in the technical system as to which module in the technical system or in the composite module is cast in the role,
the configuration of the technical system is filed in the second memory (Konf) and in the third memory (Wb),

   o there is contained a knowledge module for the technical system as copy of the knowledge module for the type to which the technical system belongs,
   o there is contained an individual knowledge module as copy of the knowledge module for the type, to which the module belongs, for each module of the technical system and
   o each knowledge module formed in such a manner for a module (A) according to the role which module (A) occupies in the composite module (B) or in the technical system is put together with the knowledge module formed in such a manner for the module (B) or for the technical system.

2. Equipment according to claim 1,
   characterised thereby, that

   an unambiguous identification of the type is filed in the first memory (WM) for the type of technical system to which the technical system belongs as well as for each type of module which occurs in the technical system, that
   in the first memory (WM) for the type of technical systems to which the technical system belongs as well as for each type of modules which occurs at least once in the technical system there is filed

   o which disturbances at a technical system or each module of the type have a direct effect outwards,
   o which disturbances at a technical system or each module of the type are caused directly from outside,
   o which disturbances at a technical system or each module of the type act internally,
   o which disturbances at a technical system or each module of the type have the consequence of which other disturbances at the technical system or the module
   o and, in the case of a module of the type, whether it is elemental or composite,

   in the first memory (WM) for the type of technical systems to which the technical system belongs, as well as for each type of technical composite modules which occurs at least once in the technical system, there is filed

   o which roles must be cast in the technical system or in the module in order that the technical system or the module can fulfil its target function and

- o it is filed for each of these roles in the technical system or in the module

  - which disturbances at the role have a direct effect outwards,
  - which disturbances at the role are caused directly from outside,
  - for each disturbance St at the role having a direct effect outwards, which other disturbances at a technical system or a module of the type and which disturbances at other roles in this technical system or in this module are the consequence of the disturbance St and
  - for each disturbance St at the role caused directly from outside, which other disturbances at a technical system or a module of the type and which disturbances at other roles in this technical system or in this module are the consequence of the disturbance St.

**3.** Equipment according to claim 1 or 2, characterised thereby, that in the second memory (Konf),

- o there is filed which type the technical system is,
- o there is filed which type the module is, which is cast into the role, for the technical system and for each composite module in the technical system in the technical system.
- o and it is made recognisable by identifications or in other ways which modules are cast in several roles at the same time.

**4.** Equipment according to one of the claims 1 to 3, characterised thereby, that

a remedy for each disturbance, which occurs at a technical system of the type, to which the technical system belongs, and which is caused directly from outside, is filed in the first memory (WM), in the first memory (WM), there is filed for the type of technical system to which the technical system belongs as well as for each type of modules which occurs at least once in the technical system

- o a remedy at the technical system or module for each disturbance at a technical system or a module of the type, which (disturbance) is either the consequence of another disturbance at the technical system or at the module or is still caused directly from outside at a role in the technical system or module,

- o which examinations can be performed at a technical system or a module of the type in the course of a diagnosis,
- o which result the examination has when the technical system is undisturbed, i.e. the target result for each examination at a technical system or a module of the type,
- o which results the examination can have apart from its target result, i.e. all the off-target results for each examination at a technical system or a module of the type,
- o the disturbances at the technical system or module, by which (disturbances) each off-target result of an examination at a technical system or a module of the type can be explained, and
- o which disturbances at the technical system or module are incompatible with each result of an examination at a technical system or a module of the type.

**5.** Equipment according to one of the claims 1 to 4, characterised thereby, that

an unambiguous identification of the type is filed in the first memory (WM) for the type, to which the technical system belongs, as well as for each type of module which occurs in the technical system and in the second memory (Konf), there is filed

- o a respective unambiguous identification for the technical system and for each module in the technical system and
- o which identification the module has, which is cast in the role, for each role in the technical system and for each role in each composite module in the technical system.

**6.** Equipment according to one of the claims 1 to 4, characterised thereby, that

the first computer (Konf-R) produces an unambiguous identification for the technical system and for each module in the technical system and the first computer (Konf-R), when a module is put together, ascertains the identification of the casting of the role in the module for each role in this module.

**7.** Equipment according to one of the claims 1 to 6,

consisting of a first computer (Wb compiler) with reading access to a first memory (WM) and a second memory (Konf) as well as at least temporarily with writing access to a third memory (Wb-zw) and

of a second computer (Wb-extractor) at least temporarily with reading access to the third memory (Wb-zw) and at least temporarily with writing access to a fourth memory (Wb),

characterised thereby, that

in a first phase the first computer (Wb compiler) compiles the knowledge base for a technical system according to one of claims 1 to 5 and files it in the third memory (Wb-zw), and the second computer (Wb-extractor) in a second phase

- o ascertains which single causes can occur at the technical system and its modules,
- o ascertains for each of these causes by which remedy the cause is removed,
- o ascertains which examinations can be performed at the technical system and its modules in the course of a diagnosis,
- o ascertains for each of these examinations which target result and which off-target results the examination has,
- o ascertains for each result the causes with which it is incompatible,
- o ascertains additionally for each off-target the causes by which it is explained,
- o and files all these information data in Wb.

8. Equipment according to one of the claims 1 to 7, characterised thereby, that the information data are ordered taxonomically in the first memory (WM) in that it can be stored in the description of a module type in the first memory (WM) the description of which other module type the information data about the module type can be derived when these data are absent in the description of the module type.

9. Equipment according to one of the claims 1 to 8,

consisting of a first computer (Konf-R) with reading access to first memory (WM) and a second memory (Konf-Info) and at least temporarily with writing access to a third memory (Konf) and of a second computer (WB compiler) with reading access to a first memory (WM), reading access to a third memory (Konf) and at least temporarily with writing access to a fourth memory (Wb),

characterised thereby, that

in the second memory (Konf-Info), there is filed for the type of technical systems, to which the technical system belongs as well as for each type of modules, which occurs at least once in the technical system and for each role in a technical system or module of this type,

- o the module type of which the casting of the role is, and
- o there can be filed which other roles in the technical system or in the module are additionally occupied by a casting of this role, wherein this determination may be linked to a condition and
- o there can be filed which roles in other composite modules are additionally occupied by a casting of this role, wherein this determination may be linked to a condition and

and the first computer (Wb compiler) in a first phase and after reading access to the second computer (Konf-Info) ascertains the configuration of the technical system and files it in the third memory (Konf) and thereafter produces the knowledge base for the technical system according to one of the claims 1 to 8 and files it in the fourth memory (Wb).

10. Equipment for computer-aided diagnosis of a technical system consisting of modules,

the equipment consisting of a part equipment (e.g. Wb-compiler), with reading access to a first memory (WM) and a second memory (Konf) as well as at least temporarily with writing access to a third memory (Wb), and of a third computer (Diag) at least temporarily with reading access to the third memory (Wb),

characterised thereby, that

the part equipment automatically compiles a knowledge base for the technical system according to one of the claims 1 to 9 and files it in the third memory (Wb) in a first phase and the third computer (Diag) diagnoses the technical system in a second phase.

11. Equipment according to claim 10,

the equipment consisting of a part equipment (e.g. Wb-compiler), with reading access to a first memory (WM) and a second memory (Konf) as well as at least temporarily with writing access to a third memory (Wb), and of a third computer (Diag) at least temporarily with reading access to the third memory (Wb) and reading and writing access to a working memory (AS),

characterised thereby, that
the part equipment (Wb-compiler) automatically compiles the knowledge base for a technical system according to one of the claims 1 to 9 and files it in the third memory (Wb) in a first phase and the third computer (Diag) diagnoses the technical system in a second phase in that the third computer (Diag)

o for each reading access to the third memory (Wb) ascertains which causes can occur at the technical system and enters these causes into the working memory (AS),

o thereafter carries out a sequence in a loop for as long as the working memory (AS) still contains several causes, which sequence consists in that the third computer (Diag)

- automatically carries out an examination or lets it be carried out by a human being,
- thereafter ascertains the result of the examination
- deletes all causes from the working memory (AS), which are incompatible with the result
- thereafter when the result is an off-target result of the examination,

- deletes all causes from the working memory (AS), which do not explain the result,
- and augments the working memory (AS) by all multiple causes which consist of a cause explained by the result and of a cause which the third computer (Diag) has just deleted from the working memory (AS),

- when a single cause is still contained in the working memory (AS),

- marks this cause as actually present and
- automatically performs the associated remedy

- or, when no cause is contained in the working memory (AS), marks the technical system as free of disturbance.

12. Equipment according to one of the claims 10 and 11, characterised thereby, that the second memory (Konf) is contained in the technical system to be diagnosed and the first computer (Wb-compiler) gets reading access to the second memory (Konf) by on-line access or by way of data carrier only at the time, at which the technical system is to be diagnosed and automatically produces a knowledge base.

13. Equipment according to one of the claims 9 to 12, characterised thereby, that the first memory (WM) is contained wholly or partly in the technical system to be diagnosed and the first computer (Wb-compiler) gets reading access to the second memory (Konf) by on-line access or by way of data carrier only at the time, at which the technical system is to be diagnosed and automatically produces a knowledge base.

14. Equipment according to one of the claims 9 to 13, characterised thereby, that the first computer (Konf-R) and/or the second computer (Wb-compiler) is or are identical with the third computer (Diag).

15. Equipment according to one of the claims 9 to 14, characterised thereby, that the first computer (Konf-R) and/or the second computer (Wb-compiler) and/or the third computer (Diag) is or are contained in the technical system to be diagnosed.

16. Equipment according to one of the claims 1 to 15, characterised thereby, that a characterisation of frequency of occurrence is filed for each cause which can occur at the technical system and a characterisation of the costs of performance is filed for each examination which can be performed at the technical system.

17. Equipment according to one of the claims 1 to 16, with a third computer (Diag) at least temporarily with reading access to the third memory (Wb), characterised thereby, that the third computer (Diag) in dependence on the characterisations of the frequency of occurrence of all causes and the costs of performance of all examinations selects that examination which displays the most favourable ratio of benefit to be expected for differentiation between the still possible causes and costs.

18. Equipment for the compilation of a complete disturbance graph for a technical system consisting of modules, the equipment consisting of a computer (Wb compiler) with reading access to a first memory (WM) and a second memory (Konf) as well as at least temporarily with writing access to a third memory (Wb), characterised thereby, that all information data are filed according to one of the claims 1 to 17 in the first memory (WM) and the computer (Wb-compiler) automatically compiles a complete disturbance graph for the technical system according to one of the claims 1 to 17 and files it in the third memory (Wb).

**Revendications**

1. Dispositif pour générer la base de connaissance d'un système expert qui établit le diagnostic d'un système technique constitué de modules,

   constitué d'un ordinateur (générateur de base de connaissance Wb) avec accès pour lecture à une première mémoire (WM) et une seconde mémoire (Konf) ainsi qu'au moins temporairement avec accès pour écriture à une troisième mémoire (Wb),
   a partir d'informations relatives au système technique, à ses incidents et à ses diagnostics qui sont mémorisés dans une première mémoire (WM), structurés de façon que
   pour le type auquel appartient le système technique il y ait un module de connaissance qui contienne toutes les informations nécessaires relatives à la structure intérieure du système technique de ce type ainsi que, au besoin, relatives aux incidents, et aux essais concernant un système technique de ce type,
   et que, pour chacun des types de module qui se présente au moins une fois dans le système technique, il y ait un module de connaissance qui contienne toutes les informations nécessaires relatives à la structure interne d'un module de ce type ainsi que, au besoin, aux incidents, aux remèdes, aux essais et aux résultats concernant un module de ce type,

   **caractérisé par le fait que**

   dans le module de connaissance existant pour le type auquel appartient le système technique est contenue l'information disant quels rôles, c'est-à-dire quelles fonctions partielles, pouvant être remplies par association d'un module, doivent être occupés, c'est-à-dire doivent avoir reçu un module en association pour que le système technique puisse remplir sa fonction prescrite,
   que, pour chaque type de modules assemblés, qui apparaissent dans un problème technique du type, dans le module de connaissance pour ce type de module est contenue l'information disant quels rôles doivent être occupés dans un module de ce type de module pour que le module puisse remplir sa fonction prescrite,
   que, pour chaque rôle dans le système technique et pour chaque rôle dans chaque module assemblé dans le système technique, le dispositif dispose de l'information disant quel module occupe le rôle dans le système technique ou dans le module assemblé.
   que, dans la seconde mémoire (Konf) est mémorisée la configuration du système technique et
   que, dans la troisième mémoire (Wb)

   o est contenu un module de connaissance pour le système technique sous forme d'une copie du module de connaissance pour le type auquel appartient le système technique,
   o pour chaque module du système technique est contenu un module de connaissance propre sous forme d'une copie du module de connaissance pour le type auquel appartient le module et
   o chaque module de connaissance, formé de cette façon, pour un module (A) en fonction du rôle que le module (A) occupe dans le module assembléé (B) ou dans le système technique, est assemblé avec le module de connaissance, formé de cette façon pour le module (B) ou pour le système technique.

2. Dispositif selon la revendication 1,
   **caractérisé par la fait que**
   dans la première mémoire (WM) pour le type de système technique auquel appartient le système technique, pour chaque type de module qui se présente dans le système technique, est mémorisée une identification non ambiguë du type,

   que dans la première mémoire (WM) pour le type de système technique auquel appartient le système technique ainsi que pour chaque type de modules qui apparaît au moins une fois dans le système technique, il est mémorisé,

   o quels incidents concernant un système technique ou concernant chaque module du type interviennent directement vers l'extérieur,
   o quels incidents concernant un système technique ou un module du type sont directement provoqués depuis l'extérieur,
   o quels incidents concernant un système technique ou un module du type interviennent en interne,
   o quels incidents concernant un système technique ou un module du type ont pour conséquence quels autres incidents concernant le système technique ou les modules,
   o et, si c'est un module du type, s'il s'agit d'un module élémentaire ou d'un module assemblé.

   que dans la première mémoire (WM) pour le type de systèmes techniques auquel appartient le système technique ainsi que pour chaque type de modules assemblés qui se présente au moins une fois dans le système technique,

- o il est mémorisé quels rôles dans le système technique ou dans le module doivent être occupés pour que le système technique ou le module puisse remplir sa fonction prescrite et
- o pour chacun de ces rôles dans le système technique ou dans le module

  - il est mémorisé quels incidents concernant le rôle interviennent directement vers l'extérieur,
  - il est mémorisé quels incidents concernant le rôle sont directement provoqués depuis l'extérieur,
  - pour chaque incident St concernant le rôle qui intervient directement vers l'extérieur, il est mémorisé quels autres incidents, concernant un système technique ou un module du type et quels incidents concernant d'autres rôles occupés dans ce système technique ou dans ce module l'incident St a pour conséquence,
  - pour chaque incident St concernant le rôle qui est directement provoqué depuis l'extérieur, il est mémorisé de quels autres incidents concernant un système technique ou un module du type et de quels incidents concernant d'autres rôles occupés dans le système technique ou dans ce module l'incident St est une conséquence.

3. Dispositif selon la revendication 1 ou 2, caractérisé par le fait que dans la seconde mémoire (Konf)

- o il est mémorisé de quel type est le système technique,
- o pour le système technique et pour chaque module assemblé présent dans le système technique il est mémorisé de quel type est le module qui occupe le rôle,
- o et, par des identifications ou par une autre voie, il est fait savoir quels modules occupent simultanément plusieurs rôles.

4. Dispositif selon l'une des revendications 1, 2 ou 3, **caractérisé par le fait que**

dans la première mémoire (WM) pour chaque incident qui apparaît dans un système technique du type auquel appartient le système technique et qui est directement provoqué depuis l'extérieur est mémorisé un remède,

dans la première mémoire (WM) pour le type de systèmes techniques auquel appartient le système technique ainsi que pour chaque type de modules qui apparaît au moins une fois dans le système technique,

- o pour chaque incident concernant un système technique ou un module du type qui n'est ni une conséquence d'un autre incident concernant le système technique ou le module ou un rôle occupé dans le système technique ou dans le module, ni directement provoqué depuis l'extérieur, est mémorisé un remède concernant le système technique ou le module,
- o il est mémorisé à quels essais concernant un système technique ou un module du type on peut procéder au cours d'un diagnostic,
- o pour chaque essai concernant un système technique ou un module du type, son résultat prescrit est mémorisé, c'est-à-dire qu'est mémorisé quel résultat a l'essai si le système technique ne présente pas d'incident,
- o pour chaque essai concernant un système technique ou un module du type tous ses résultats non prescrits sont mémorisés, c'est-à-dire que sont mémorisés quels résultats l'essai peut avoir en dehors de son résultat prescrit,
- o pour chaque résultat non prescrit d'un essai concernant un système technique ou un module du type il est mémorisé par quels incidents concernant le système technique ou le module ce résultat s'explique,
- o pour chaque résultat d'un essai concernant le système technique ou un module du type il est mémorisé avec quels incidents concernant le système technique ou le module le résultat est incompatible.

5. Dispositif selon l'une des revendications 1 à 4, **caractérisé par le fait que**

dans la première mémoire (WM) pour le type de système technique auquel appartient le système technique, ainsi que pour chaque type de module présent dans le système technique, est mémorisée une identification non ambiguë du type, et dans la seconde mémoire (Konf)

- o pour le système technique et pour chaque module présent dans le système technique est chaque fois mémorisée une identification non ambiguë et

o pour chaque rôle occupé dans le système technique et pour chaque rôle occupé dans chaque module assemblé présent dans le système technique il est mémorisé quelle identification a le module qui occupe le rôle.

**6.** Dispositif selon l'une des revendications 1 à 4, **caractérisé par le fait que**

le premier ordinateur (Konf-R) pour le système technique et pour chaque module présent dans le système technique produit une identification non ambiguë,
et que, lorsque le dispositif assemble un module, le premier ordinateur (Konf-R) détermine, pour chaque rôle occupé dans ce module, l'identification de l'occupation du rôle occupé dans le module.

**7.** Dispositif selon l'une des revendications 1 à 6,

constitué d'un premier ordinateur (générateur de base de connaissance Wb) avec accès pour lecture à une première mémoire (WM) et à une seconde mémoire (Konf) ainsi qu'avec au moins temporairement accès pour écriture à une troisième mémoire (Wb-zw),
d'un second ordinateur (extracteur de base de connaissance Wb) avec au moins temporairement accès pour lecture à la troisième mémoire (Wb-zw) et avec au moins temporairement accès pour écriture à une quatrième mémoire (Wb-zw).

**caractérisé par le fait que**

dans une première phase, le premier ordinateur (générateur Wb) génère la base de connaissance pour un système technique selon le procédé conforme à l'une des revendications 1 à 5 et la mémorise dans la troisième mémoire (Wb-zw),
dans une seconde phase le second ordinateur (extracteur Wb)

o détermine quelles causes simples peuvent apparaître sur le système technique et ses modules,
o pour chacune de ces causes, détermine par quels remèdes il peut être remédié à la cause,
o détermine à quels essais concernant le système technique et ses modules on peut procéder au cours d'un diagnostic,
o pour chacun de ces essais, détermine quel résultat prescrit et quels résultats non prescrits a l'essai,

o pour chaque résultat, détermine avec quelles causes il est incompatible,
o pour chaque résultat non prescrit, détermine en outre par quelles causes il s'explique,
o et mémorise toutes ces informations dans Wb.

**8.** Dispositif selon l'une des revendications 1 à 7, caractérisé par le fait que
les informations sont ordonnées dans la première mémoire (WM) par taxonomie en ce sens que dans la première mémoire (WM), dans la description d'un type de module, il peut être mémorisé à la description de quel autre type de module il faut prélever les informations relatives au type de module lorsque celles-ci manquent dans la description du type de module.

**9.** Dispositif selon l'une des revendications 1 à 8,

constitué d'un premier ordinateur (Konf-R) avec accès pour lecture à une première mémoire (WM) et à une seconde mémoire (Konf-Info) et avec au moins temporairement accès pour écriture à une troisième mémoire (Konf-Info) et d'un second ordinateur (générateur de base de connaissance Wb) avec accès pour lecture à une première mémoire (WM), accès pour lecture à une troisième mémoire (Konf), avec au moins temporairement accès pour écriture à une quatrième mémoire (Wb),

**caractérisé par le fait que**

dans le seconde mémoire (Konf-Info) pour le type de systèmes techniques auquel appartient le système technique, ainsi que pour chaque type de modules qui apparaît au moins une fois dans le système technique,
pour chaque rôle occupé dans le système technique ou dans un module de ce type,

o il est mémorisé par quel type de module ce rôle est occupé,
o il peut être mémorisé de quels autres rôles dans le système technique ou dans le module une occupation de ce rôle entraîne en outre l'occupation, cette définition pouvant être logiquement reliée à une condition,
o il peut être mémorisé de quels rôles dans les autres modules assemblés, une occupation de ce rôle entraîne en outre l'occupation, cette définition pouvant être logiquement reliée à une condition.

et que dans une première phase le premier ordinateur (générateur Wb) détermine, après accès pour lecture à la seconde mémoire (Konf-Info) la configuration du système technique et la mémorise dans la troisième mémoire (Konf).

et ensuite produit la base de connaissance pour le système technique selon l'une des revendications 1 à 8 et la mémorise dans la quatrième mémoire (Wb).

10. Dispositif pour le diagnostic, aidé par ordinateur, d'un système technique constitué de modules,

constitué d'un dispositif partiel, (par exemple générateur de base de connaissance Wb) avec accès pour lecture à une première mémoire (WM) et à une seconde mémoire (Konf) ainsi qu'avec au moins temporairement accès pour écriture à une troisième mémoire (Wb),
et d'un troisième ordinateur (Diag) avec au moins temporairement accès pour lecture à la troisième mémoire (Wb),

**caractérisé par le fait que**

dans une première phase le dispositif partiel génère automatiquement une base de connaissance pour le système technique selon l'une des revendications 1 à 9 et la mémorise dans la troisième mémoire (Wb),
et que dans une seconde phase le troisième ordinateur (Diag) procède au diagnostic du système technique.

11. Dispositif selon la revendication 10,

constitué d'un dispositif partiel (par exemple générateur de base de connaissance Wb) avec accès pour lecture à une première mémoire (WM) et à une seconde mémoire (Konf) ainsi qu'avec au moins temporairement accès pour écriture à une troisième mémoire (Wb),
et d'un troisième ordinateur (Diag) avec au moins temporairement accès pour lecture à la troisième mémoire (Wb) et accès pour lecture et écriture à une mémoire de travail (AS),

**caractérisé par le fait que**

dans une première phase le dispositif partiel (générateur Wb) génère la base de connaissance pour un système technique selon l'une des revendications 1 à 9 et la mémorise dans la troisième mémoire (Wb), et
dans une seconde phase le troisième ordinateur (Diag) procède au diagnostic du système technique en ce sens que le troisième ordinateur (Diag),

o détermine, par accès pour lecture à la troisième mémoire (Wb), quelles causes concernant le système technique peuvent survenir et inscrit ces causes dans la mémoire de travail (AS),
o exécute ensuite dans une boucle, aussi longtemps que la mémoire de travail (AS) contient encore plusieurs causes, la séquence constituée de ce que le troisième ordinateur (Diag),

- exécute automatiquement un essai ou le fait exécuter par un homme,
- puis détermine quel résultat a l'essai,
- puis élimine dans la mémoire de travail (AS) toutes les causes qui sont incompatibles avec le résultat,
- puis, si le résultat est un résultat non prescrit de l'essai,

  - élimine de la mémoire de travail (AS) toutes les causes qui n'expliquent pas le résultat,
  - et complète la mémoire de travail (AS) de toutes les causes multiples constituées d'une cause qui explique le résultat et d'une cause que le troisième ordinateur (Diag) a justement éliminé de la mémoire de travail (AS),

o puis, lorsqu'une unique cause est encore contenue dans la mémoire de travail (AS),

- note cette cause comme étant effectivement celle dont il s'agit et
- procède automatiquement au remède correspondant.

o ou, si aucune cause n'est contenue dans la mémoire de travail (AS), note le système technique comme exempt d'incident.

12. Dispositif selon l'une des revendications 10 ou 11,
**caractérisé en ce que**
la seconde mémoire (Konf) est contenue dans le système technique dont il faut établir le diagnostic et que ce n'est qu'à l'instant où il faut établir le diagnostic du système technique que le premier ordinateur (générateur Wb) obtient, par un accès en ligne ou par un support de données, accès pour lecture à la seconde mémoire (Konf) et produit automatiquement une base de connaissance.

13. Dispositif selon l'une des revendications 9 à 12,
**caractérisé par le fait que**
la première mémoire (Wm) est entièrement ou partiellement contenue dans le système technique dont il faut établir le diagnostic et que ce n'est qu'à l'instant ou il faut établir le diagnostic du système technique que le premier ordinateur (générateur W)b) obtient, par un accès en ligne ou par un support de données, accès pour lecture à la seconde mémoire (Konf) et produit automatiquement une base de connaissance.

14. Dispositif selon l'une des revendications 9 à 13,
    **caractérisé par le fait que**
    le premier ordinateur (Konf-R) et/ou le second ordinateur (générateur Wb) est identique au troisième ordinateur (Diag).

15. Dispositif selon l'une des revendications 9 à 14,
    **caractérisé par le fait que**
    le premier ordinateur (Konf-R) est et/ou le second ordinateur (générateur Wb) et/ou le troisième ordinateur (Diag) sont contenus dans le système technique dont il faut établir le diagnostic.

16. Dispositif selon l'une des revendications 1 à 15,
    **caractérisé par le fait que**

    dans la première mémoire (WM)
    pour chaque cause qui peut survenir dans le système technique, est mémorisée une caractérisation de sa fréquence de survenance et pour chaque essai auquel on peut procéder dans le système technique, est mémorisée une caractérisation des coûts de son exécution.

17. Dispositif selon l'une des revendications 1 à 16,
    avec un troisième ordinateur (Diag) avec au moins temporairement accès pour lecture à la troisième mémoire (Wb),
    **caractérisé par le fait que**
    le troisième ordinateur (Diag) choisit, en fonction des caractérisations des fréquences de survenance de toutes les causes et des coûts d'exécution de tous les essais, l'essai qui présente le rapport le plus favorable de l'utilité à attendre pour établir une différenciation entre les causes encore possibles et les coûts.

18. Dispositif pour générer un graphe d'incidentss complet pour un système technique constitué de modules,
    constitué d'un ordinateur (générateur Wb) avec accès pour lecture à une première mémoire (WM) et une seconde mémoire (Konf) ainsi qu'avec au moins temporairement accès pour écriture à une troisième mémoire (Wb).
    **caractérisé par le fait que**

    dans la première mémoire (WM) sont mémorisées toutes les informations conformément à l'une des revendications 1 à 17.

et que l'ordinateur (Wb) génère automatiquement un graphe d'incidentss complet pour le système technique conformément à l'une des revendications 1 à 17 et le mémorise dans la troisième mémoire (Wb).

Fig. 1

Einheiten

Systeme

Komponenten

technisches
System

Teilsysteme

Fig. 2

ist Subsystem von

wird
untersucht
durch

Teilsysteme
Komponenten

Untersuchungen

wird gestört durch

hat

erklärt

Störungen
Ursachen

Resultate

ist unvereinbar

ist Folge von

wird beseitigt durch

Abhilfen

Fig. 3

Ein

Stg

Stg wird unmittelbar von außen an Ein bewirkt

Stg

Ein

Stg wirkt unmittelbar von Ein nach außen

Stg

Ein

Stg stört Ein intern

Fig. 4

Stg wird  unmittelbar von außen an Rolle in Sys bewirkt

Stg wirkt unmittelbar von Rolle in Sys nach außen

Fig. 5

Fig. 6

Fig. 6a

② 

AS-
Stg ---▸ Bestimme alle Störungen ohne Entsprechung

Für jede Störung St ohne Entsprechung

START

Bestimme alle Störungen,
die Folge oder Versacher von St,
aber nicht einer anderen Störung sind

Streiche aus dem Gesamt-Störungs-Graphen
St und alle diese Störungen ---▸ AS

ENDE

Gesamt-Störungsgraph
in AS

ENDE

Fig. 6b

START

AS ⟶ Ermittle alle Störungen
im Störungsgraph-Modul von SYS
unmittelbar von Ro nach außen wirken

Für jede derartige Störung St:

START

AS ⟶ Suche im Störungsgraph-Modul von Ein
nach einer Entsprechung St-1 für St,
die unmittelbar von Ein nach außen wirkt

Entsprechung
gefunden?

Ersetze
im Störungsgraph-Modul von SYS
St durch St-1

Trage St in AS-Stg ein

AS

ENDE

ENDE

AS-
Stg

1

Fig. 7

Im Speicher Konf ist folgende Information agespeichert:
Die Rolle R im System SYS wird von der Einheit KOMP besetzt.

Bei der Einfügung wird ermittelt:
o Stg-A entspricht Stg-A1
o Stg-B entspricht Stg-B1
o Stg-C entspricht Stg-C1

Fig. 8

START

Wb --→ Bestimme die an TS möglichen Ursachen

Speichere die an TS möglichen Ursachen ab --→ AS

AS --→ Bestimme Unt-next,
die nächste Untersuchung

Wb --↗

Führe Unt-next aus und ermittle
ihr Resultat Resu

Wb --→ Ermittle den Zusammenhang
von Resu mit Ursachen.

Werte Resu aus.
Speichere die
noch möglichen Ursachen ab  --→ AS

Nur noch
eine Ursache
möglich?

nein          ja

Ursache
gefunden

ENDE

Fig. 9

Fig. 10

START

Wb-
Speicher ⟶ Ermittle, welche Ursachen
Resu erklären ⟶ AS-
erkl-0

AS-
erkl-1 ⟶ Streiche aus AS-erkl jede Ursache,
die Resu nicht erklärt ⟶ AS-erkl

AS-
unver-1

AS-
erkl-0 ⟶ Trage in AS-erkl-1
alle Ursachen aus AS ein,
die Resu weder erklären
noch mit Resu unvereinbar sind ⟶ AS-
erkl-1

AS-erkl

AS-
unver ⟶ Trage in AS-erkl-2
alle Resu erklärenden Ursachen ein,
die nicht alle bislang gewonnen Resultate
erklären, aber mit keinem unvereinbar sind ⟶ AS-
erkl-2

AS-
erkl-1

AS-
erkl-2 ⟶ Trage in AS-erkl alle Mehrfach-Ursachen ein,
die aus einer Ursache aus AS-erkl-1
und einer aus AS-erkl-2 bestehen ⟶ AS-erkl

ENDE

Auswertung der Erklärungen für Resu

Fig. 11

Resultat-1 —— wird erklärt durch ——> Störung-1    Störung-2

ist Verursacher von                    ist Verursacher von

Ursache-1    Ursache-2

durch "Extraktion"

Resultat-1 —— wird erklärt durch ——> Ursache-1 ODER Ursache-2

Resultat-2 —— ist unvereinbar mit ——> Störung-1    Störung-2

ist Verursacher von                    ist Verursacher von

Ursache-1    Ursache-2

durch "Extraktion"

Resultat-2 —— ist unvereinbar mit ——> Ursache-1

Fig. 12

41

Fig. 13

Fig. 1 3 (Forts.)